(19) Europäisches Patentamt / European Patent Office / Office européen des brevets

(11) **EP 4 761 381 A1**

(12) **EUROPEAN PATENT APPLICATION**
published in accordance with Art. 153(4) EPC

(43) Date of publication:
**17.06.2026 Bulletin 2026/25**

(21) Application number: **24861862.1**

(22) Date of filing: **26.08.2024**

(51) International Patent Classification (IPC):
**H04W 52/02** (2009.01)

(52) Cooperative Patent Classification (CPC):
**H04W 52/02;** Y02D 30/70

(86) International application number:
**PCT/CN2024/114604**

(87) International publication number:
**WO 2025/051018 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023 CN 202311163329**

(71) Applicant: HUAWEI TECHNOLOGIES CO., LTD.
**Shenzhen 518129 (CN)**

(72) Inventors:
• **XIANG, Hongyu**
  **Shenzhen, Guangdong 518129 (CN)**
• **HAN, Feng**
  **Shenzhen, Guangdong 518129 (CN)**
• **CHEN, Lei**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57) This application provides a communication method and apparatus, to improve an energy saving effect of a network device. The method includes: A terminal device receives first information indicating a sleep cycle of a network device, and determines a paging frame based on the sleep cycle. The terminal device monitors a paging message on the paging frame. In embodiments of this application, the terminal device and the network device determine the paging frame based on the sleep cycle of the network device, to extend an interval between paging frames. For example, paging frames may be concentrated in on duration of the network device. In this way, a quantity of times that the network device wakes up can be reduced, and an energy saving effect of the network device can be improved.

[FIG. 4]

**Description**

<u>CROSS-REFERENCE TO RELATED APPLICATIONS</u>

This application claims priority to Chinese Patent Application No. 202311163329.5, filed with the China National Intellectual Property Administration on September 8, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

In a system like a new radio (new radio, NR) system, a terminal device in a radio resource control (radio resource control, RRC) idle (idle) state or an RRC inactive (inactive) state may regularly wake up to monitor a paging (paging) message in a discontinuous reception (discontinuous reception, DRX) manner. A regular wake-up cycle may be referred to as a DRX cycle, and a wake-up position is referred to as a paging occasion (paging occasion, PO). The PO is in a paging frame or a start position of the PO is in the paging frame (paging frame, PF). The terminal device may determine, based on a paging cycle T, a quantity of PFs in one paging cycle, a quantity of POs, and an identifier of the terminal device, a PO on which monitoring needs to be performed.

With gradual evolution of communication systems, how to reduce energy consumption of a network device (for example, a base station) is increasingly concerned. One of main technical means for reducing the energy consumption of the network device is to cause the network device to perform discontinuous transmission (discontinuous transmission, DTX)/DRX when the network device is unloaded and lightly loaded. In this case, the network device may sleep in a time period in which sending and receiving are not performed, to save energy of the network device.

With reference to the foregoing descriptions, a current problem is that, because the network device needs to frequently wake up in the foregoing paging frame determining manner, an energy saving effect of the network device is poor.

SUMMARY

This application provides a communication method and apparatus, to improve an energy saving effect of a network device.

According to a first aspect, a communication method is provided. The method may be performed by a terminal device or a chip, a chip system, or a circuit located in the terminal device. The method may be implemented by using the following steps: receiving first information indicating a sleep cycle of a network device; determining a paging frame based on the sleep cycle; and monitoring a paging message on the paging frame.

In this embodiment of this application, the terminal device and the network device determine the PF based on the sleep cycle of the network device, to extend an interval between PFs. For example, PFs may be concentrated in on duration of the network device. In this way, a quantity of times that the network device wakes up can be reduced, and an energy saving effect of the network device can be improved.

In a possible design, the first information is the sleep cycle T1. In this manner, a sleep cycle parameter of the network device is introduced, so that the network device and the terminal device may determine the PF based on the sleep cycle of the network device. In this way, PFs may be concentrated in the on duration of the network device, thereby reducing the quantity of times that the network device wakes up, and improving the energy saving effect of the network device.

In a possible design, when the paging frame is determined based on the sleep cycle, the paging frame may be determined based on the sleep cycle and a paging cycle. In the foregoing manner, a DRX cycle of the terminal device and the sleep cycle of the network device may be comprehensively considered, so that a paging success probability can be increased.

In a possible design, determining the paging frame based on the sleep cycle and the paging cycle includes: determining a system frame number (system frame number, SFN) of the paging frame based on a maximum value between the sleep cycle and the paging cycle. In the foregoing manner, the PF interval can be extended, so that the quantity of times that the network device wakes up is reduced, and the energy saving effect of the network device is improved.

In a possible design, determining the system frame number SFN of the paging frame based on the maximum value between the sleep cycle and the paging cycle includes: The SFN of the paging frame satisfies the following formula: A mod max(T1, T)=0, where A is determined based on the SFN, T1 is the sleep cycle, T is the paging cycle, and mod is a modulo operation. In this embodiment of this application, PFs of different terminal devices can be aggregated to a same PF, so that the quantity of times that the network device wakes up can be reduced, and the energy saving effect of the network device can be improved.

In a possible design, determining the paging frame based on the sleep cycle includes: when the sleep cycle is less than or equal to a paging cycle, determining a quantity N' of paging frames based on the sleep cycle and the paging cycle; and determining an SFN of the paging frame based on N'. In this embodiment of this application, the PFs of different terminal devices can be aggregated to the same PF, so that the quantity of times that the network device wakes up can be reduced, and the energy saving effect of the network device can be improved.

In a possible design, N' satisfies the following formula: N'=T div T1, where T1 is the sleep cycle, T is the paging cycle, and div is an exact division operation.

In a possible design, determining the SFN of the paging frame based on N' includes: The SFN of the paging frame satisfies the following formula: A mod T=T1*(UE_ID mod N'), where A is determined based on the SFN, T is the paging cycle, T1 is the sleep cycle, and mod is a modulo operation.

In a possible design, the first information is a quantity N of paging frames, N is less than T/16, T is a paging cycle, and N is used for determining the sleep cycle. In this manner, a candidate value of N is added, so that the sleep cycle of the network device can be extended, the quantity of times that the network device wakes up can be reduced, and the energy saving effect of the network device can be improved.

In a possible design, determining the paging frame based on the sleep cycle includes: An SFN of the paging frame satisfies the following formula: A mod T2=T1*(UE_ID mod T2/T1), where A is determined based on the SFN, T2=max(T1, T), T1 is the sleep cycle, T is the paging cycle, UE_ID is an identifier of the terminal device, mod is a modulo operation, and div is an exact division operation.

In the foregoing manner, when T1 is less than T, backward compatibility can be implemented. When T1 is greater than or equal to T, in this embodiment of this application, PFs in different paging cycles can be aggregated to a same PF, so that the quantity of times that the network device wakes up can be reduced, and the energy saving effect of the network device can be improved.

In a possible design, A=SFN; or A=SFN+offset, where the offset is an offset of the system frame number.

In a possible design, the method further includes: reporting capability information, where the capability information indicates that the terminal device supports a network energy saving mode. In the foregoing manner, behavior of the terminal device can be consistent with that of the network device through capability negotiation, thereby increasing the paging success probability.

In a possible design, the method further includes: receiving second information, where the second information indicates that the network device enables the network energy saving mode. In the foregoing manner, the behavior of the terminal device can be consistent with that of the network device, thereby increasing the paging success probability.

According to a second aspect, a communication method is provided. The method may be performed by a network device or a chip, a chip system, or a circuit located in the network device. The method may be implemented by using the following steps: sending first information indicating a sleep cycle of the network device; determining a paging frame based on the sleep cycle; and sending a paging message on the paging frame.

In this embodiment of this application, a terminal device and the network device determine the PF based on the sleep cycle of the network device, to extend an interval between PFs. For example, PFs may be concentrated in on duration of the network device. In this way, a quantity of times that the network device wakes up can be reduced, and an energy saving effect of the network device can be improved.

In a possible design, the first information is the sleep cycle T1. In this manner, a sleep cycle parameter of the network device is introduced, so that the network device and the terminal device may determine the PF based on the sleep cycle of the network device. In this way, PFs may be concentrated in the on duration of the network device, thereby reducing the quantity of times that the network device wakes up, and improving the energy saving effect of the network device.

In a possible design, when the paging frame is determined based on the sleep cycle, the paging frame may be determined based on the sleep cycle and a paging cycle. In the foregoing manner, a DRX cycle of the terminal device and the sleep cycle of the network device may be comprehensively considered, so that a paging success probability can be increased.

In a possible design, determining the paging frame based on the sleep cycle and the paging cycle includes: determining an SFN of the paging frame based on a maximum value between the sleep cycle and the paging cycle. In the foregoing manner, the PF interval can be extended, so that the quantity of times that the network device wakes up is reduced, and the energy saving effect of the network device is improved.

In a possible design, determining the system frame number SFN of the paging frame based on the maximum value between the sleep cycle and the paging cycle includes: The SFN of the paging frame satisfies the following formula:

A mod max(T1, T)=0, where A is determined based on the SFN, T1 is the sleep cycle, T is the paging cycle, and mod is a modulo operation. In this embodiment of this application, PFs of different terminal devices can be aggregated to a same PF, so that the quantity of times that the network device wakes up can be reduced, and the energy saving effect of the network device can be improved.

In a possible design, determining the paging frame based on the sleep cycle includes: when the sleep cycle is less than or equal to a paging cycle, determining a quantity N' of paging frames based on the sleep cycle and the paging cycle; and determining an SFN of the paging frame based on N'. In this embodiment of this application, the PFs of different terminal devices can be aggregated to the same PF, so that the quantity of times that the network device wakes up can be reduced, and the energy saving effect of the network device can be improved.

In a possible design, N' satisfies the following formula: N'=T div T1, where T1 is the sleep cycle, T is the paging cycle, and div is an exact division operation.

In a possible design, determining the SFN of the paging frame based on N' includes: The SFN of the paging frame satisfies the following formula: A mod T=T1*(UE_ID mod N'), where A is determined based on the SFN, T is the paging cycle, T1 is the sleep cycle, and mod is a modulo operation.

In a possible design, the first information is a quantity N of paging frames, N is less than T/16, T is a paging cycle, and N is used for determining the sleep cycle. In this manner, a candidate value of N is added, so that the sleep cycle of the network device can be extended, the quantity of times that the network device wakes up can be reduced, and the energy saving effect of the network device can be improved.

In a possible design, determining the paging frame based on the sleep cycle includes: An SFN of the paging frame satisfies the following formula: A mod T2=T1*(UE_ID mod T2/T1), where A is determined based on the SFN, T2=max(T1, T), T1 is the sleep cycle, T is the paging cycle, UE_ID is an identifier of the terminal device, mod is a modulo operation, and div is an exact division operation.

In the foregoing manner, when T1 is less than T, backward compatibility can be implemented. When T1 is greater than or equal to T, in this embodiment of this application, PFs in different paging cycles can be aggregated to a same PF, so that the quantity of times that the network device wakes up can be reduced, and the energy saving effect of the network device can be improved.

In a possible design, A=SFN; or A=SFN+offset, where the offset is an offset of the system frame number.

In a possible design, the method further includes: determining that the terminal device supports a network energy saving mode; and enabling the network energy saving mode. In the foregoing manner, behavior of the terminal device can be consistent with that of the network device through capability negotiation, thereby increasing the paging success probability.

In a possible design, the method further includes: sending second information, where the second information indicates that the network device enables the network energy saving mode. In the foregoing manner, the behavior of the terminal device can be consistent with that of the network device, thereby increasing the paging success probability.

According to a third aspect, a communication method is provided. The method may be performed by a terminal device or a chip, a chip system, or a circuit located in the terminal device. The method may be implemented by using the following steps: determining a paging occasion based on an identifier of the terminal device; and monitoring a paging message on the paging occasion, where if the terminal device runs in a network energy saving mode, a quantity of bits of the identifier of the terminal device is greater than a quantity of bits for the terminal device that does not run in the network energy saving mode.

In this application, to reduce paging load in a PF, more POs may be introduced. That is, a quantity of Ns is increased. However, currently, a maximum value of UE_ID is 1024 (that is, 10 bits), and according to Formula (3) in the background, a maximum value of the quantity of Ns is 4. In this application, the quantity of bits of the identifier of the terminal device in the network energy saving mode is increased, so that Ns may be set to a larger value, for example, 8, 16, or 32. In this way, a network device and the terminal device support using more POs to perform paging, thereby reducing the paging load in the PF.

In a possible design, if the terminal device runs in the network energy saving mode, a total quantity of paging occasions in a paging cycle is greater than 4, and the quantity of bits of the identifier of the terminal device is greater than 12.

In a possible design, the terminal device runs in the network energy saving mode, UE_ID=5G-S-TMSI mod 4096, and 5G-S-TMSI is a 5G temporary mobile subscription identifier (5G S-temporary mobile subscription identifier) of the terminal device.

According to a fourth aspect, a communication method is provided. The method may be performed by a network device or a chip, a chip system, or a circuit located in the network device. The method may be implemented by using the following steps: determining a paging occasion based on an identifier of a terminal device; and sending a paging message on the paging occasion, where if the terminal device runs in a network energy saving mode, a quantity of bits of the identifier of the terminal device is greater than a quantity of bits for the terminal device that does not run in the network energy saving mode.

In this application, to reduce paging load in a PF, more POs may be introduced. That is, a quantity of Ns is increased. However, currently, a maximum value of UE_ID is 1024 (that is, 10 bits), and according to Formula (3) in the background, a maximum value of the quantity of Ns is 4. In this application, the quantity of bits of the identifier of the terminal device in the network energy saving mode is increased, so that Ns may be set to a larger value, for example, 8, 16, or 32. In this way, the network device and the terminal device support using more POs to perform paging, thereby reducing the paging load in the PF.

In a possible design, if the terminal device runs in the network energy saving mode, a total quantity of paging occasions in a paging cycle is greater than 4, and the quantity of bits of the identifier of the terminal device is greater than 12.

In a possible design, the terminal device runs in the network energy saving mode, and UE_ID=5G-S-TMSI mod 4096.

According to a fifth aspect, a communication method is provided. The method may be performed by a terminal device or a chip, a chip system, or a circuit located in the terminal device. The method may be implemented by using the following steps: receiving a paging early indication (paging early indication, PEI), where the PEI indicates a total quantity of paging occasions on which monitoring needs to be performed in a paging cycle; determining a paging occasion based on the total quantity indicated by the PEI; and monitoring a paging message on the paging occasion.

In this application, the PEI indicates the quantity of actually used POs, so that a total quantity of POs can be dynamically adjusted.

In a possible design, the total quantity indicated by the PEI is less than Ns, and Ns is a total quantity, indicated by a system message, of paging occasions on which monitoring needs to be performed in the paging cycle. In this application, considering that an excessively long PO may occupy sleep duration of the network device, and a quantity of actually arrived paging messages for the UE is small, in this application, the quantity of actually used POs is indicated by the PEI. Because the quantity of actually used POs is less than the quantity of POs indicated by the system message, on duration of the network device is further reduced.

In a possible design, the total quantity indicated by the PEI is related to a quantity of terminal devices corresponding to the PEI.

In this application, considering that the excessively long PO may occupy the sleep duration of the network device, and the quantity of actually arrived paging messages for the UE is small, in this application, a quantity of actually used POs is allocated based on a quantity of terminal devices in a terminal device subgroup, so that a total quantity of POs can be dynamically adjusted, and POs of different UEs can be aggregated to a few POs, thereby further reducing the on duration of the network device.

In a possible design, an index number i_s of the PO may satisfy the following formula:

$$i\_s=floor\ (UE\_ID/N)\ mod\ Ns'$$

Ns' is the total quantity of POs indicated by the PEI.

According to a sixth aspect, a communication method is provided. The method may be performed by a network device or a chip, a chip system, or a circuit located in the network device. The method may be implemented by using the following steps: sending a PEI, where the PEI indicates a total quantity of paging occasions on which monitoring needs to be performed in a paging cycle; determining a paging occasion based on the total quantity indicated by the PEI; and sending a paging message on the paging occasion.

In this application, the PEI indicates the quantity of actually used POs, so that a total quantity of POs can be dynamically adjusted.

In a possible design, the total quantity indicated by the PEI is less than Ns, and Ns is a total quantity, indicated by a system message, of paging occasions on which monitoring needs to be performed in the paging cycle. In this application, considering that an excessively long PO may occupy sleep duration of the network device, and a quantity of actually arrived paging messages for the UE is small, in this application, the quantity of actually used POs is indicated by the PEI. Because the quantity of actually used POs is less than the quantity of POs indicated by the system message, on duration of the network device is further reduced.

In a possible design, the total quantity indicated by the PEI is related to a quantity of terminal devices corresponding to the PEI.

In this application, considering that the excessively long PO may occupy the sleep duration of the network device, and the quantity of actually arrived paging messages for the UE is small, in this application, a quantity of actually used POs is allocated based on a quantity of terminal devices in a terminal device subgroup, so that a total quantity of POs can be dynamically adjusted, and POs of different UEs can be aggregated to a few POs, thereby further reducing the on duration of the network device.

In a possible design, an index number i_s of the PO may satisfy the following formula:

$$i\_s=floor\ (UE\_ID/N)\ mod\ Ns'$$

Ns' is the total quantity of POs indicated by the PEI.

According to a seventh aspect, a communication method is provided. The method may be performed by a terminal device or a chip, a chip system, or a circuit located in the terminal device. The method may be implemented by using the following steps: receiving a system message, where the system message indicates a total quantity Ns of paging occasions on which monitoring needs to be performed in a paging cycle; determining a paging occasion based on Ns and a total quantity N0 of paging occasions in on duration of a network device; and monitoring a paging message on the paging occasion.

In this application, considering that Ns indicated by the system message is greater than the total quantity of POs in the on duration of the network device, and an excessively long PO may occupy sleep duration of the network device, in this application, POs of different UEs can be aggregated to a same PO, to further reduce the on duration of the network device.

In a possible design, determining the paging occasion based on Ns and the total quantity N0 of paging occasions in the on duration of the network device includes: determining the paging occasion based on N', where N'=min{N0, Ns}. In the foregoing design, the total quantity of POs is reduced, so that the POs can be aggregated to a few POs, thereby reducing PO overheads, and further reducing the on duration of the network device.

In a possible design, an index value i_s of the PO may satisfy the following formula:

$$i\_s = floor\ (UE\_ID/N)\ mod\ min\{N0,\ Ns\}$$

According to an eighth aspect, a communication method is provided. The method may be performed by a network device or a chip, a chip system, or a circuit located in the network device. The method may be implemented by using the following steps: sending a system message, where the system message indicates a total quantity Ns of paging occasions on which monitoring needs to be performed in a paging cycle; determining a paging occasion based on Ns and a total quantity N0 of paging occasions in on duration of the network device; and sending a paging message on the paging occasion.

In this application, considering that Ns indicated by the system message is greater than the total quantity of POs in the on duration of the network device, and an excessively long PO may occupy sleep duration of the network device, in this application, POs of different UEs can be aggregated to a same PO, to further reduce the on duration of the network device.

In a possible design, determining the paging occasion based on Ns and the total quantity N0 of paging occasions in the on duration of the network device includes: determining the paging occasion based on N', where N'=min{N0, Ns}. In the foregoing design, the total quantity of POs is reduced, so that the POs can be aggregated to a few POs, thereby reducing PO overheads, and further reducing the on duration of the network device.

In a possible design, an index value i_s of the PO may satisfy the following formula:

$$i\_s = floor\ (UE\_ID/N)\ mod\ min\{N0,\ Ns\}$$

According to a ninth aspect, this application further provides a communication apparatus. The communication apparatus implements any method provided in the first aspect, the third aspect, the fifth aspect, or the seventh aspect. The communication apparatus may be implemented by hardware, or may be implemented by executing corresponding software by hardware. The hardware or the software includes one or more units or modules corresponding to the foregoing function.

In a possible design, the communication apparatus includes a processor, and the processor is configured to support the communication apparatus in performing a corresponding function of the terminal device in the foregoing methods. The communication apparatus further includes a memory, and the memory may be coupled to the processor, and stores program instructions and data that are necessary for the communication apparatus. Optionally, the communication apparatus further includes an interface circuit, and the interface circuit is configured to support communication between the communication apparatus and a network device.

For example, the communication apparatus has a function of implementing the method provided in the first aspect. The processor may be configured to: receive first information through the interface circuit; determine a paging frame based on a sleep cycle; and monitor a paging message on the paging frame through the interface circuit.

The communication apparatus has a function of implementing the method provided in the third aspect. The processor may be configured to: determine a paging occasion based on an identifier of the terminal device; and monitor a paging message on the paging occasion through the interface circuit.

The communication apparatus has a function of implementing the method provided in the fifth aspect. The processor may be configured to: receive a PEI through the interface circuit, where the PEI indicates a total quantity of paging occasions on which monitoring needs to be performed in a paging cycle; determine a paging occasion based on the total quantity indicated by the PEI; and monitor a paging message on the paging occasion through the interface circuit.

The communication apparatus has a function of implementing the method provided in the seventh aspect. The processor may be configured to: receive a system message through the interface circuit, where the system message indicates a total quantity Ns of paging occasions on which monitoring needs to be performed in a paging cycle; determine a paging occasion based on Ns and a total quantity N0 of paging occasions in on duration of the network device; and monitor a paging message on the paging occasion through the interface circuit.

In a possible design, the communication apparatus includes corresponding function modules respectively configured to implement the steps in the foregoing methods. The function may be implemented by hardware, or may be implemented by executing corresponding software by hardware. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the first aspect, the third aspect, the fifth aspect, or the seventh aspect. Details are not described herein again.

For example, the communication apparatus has a function of implementing the method provided in the first aspect. The processing unit is configured to: receive first information by using the communication unit; determine a paging frame based on a sleep cycle; and monitor a paging message on the paging frame by using the communication unit.

The communication apparatus has a function of implementing the method provided in the third aspect. The processing unit is configured to: receive a PEI by using the communication unit, where the PEI indicates a total quantity of paging occasions on which monitoring needs to be performed in a paging cycle; determine a paging occasion based on the total quantity indicated by the PEI; and monitor a paging message on the paging occasion by using the communication unit.

The communication apparatus has a function of implementing the method provided in the fifth aspect. The processing unit may be configured to: receive a PEI by using the communication unit, where the PEI indicates a total quantity of paging occasions on which monitoring needs to be performed in a paging cycle; determine a paging occasion based on the total quantity indicated by the PEI; and monitor a paging message on the paging occasion by using the communication unit.

The communication apparatus has a function of implementing the method provided in the seventh aspect. The processing unit may be configured to: receive a system message by using the communication unit, where the system message indicates a total quantity Ns of paging occasions on which monitoring needs to be performed in a paging cycle; determine a paging occasion based on Ns and a total quantity N0 of paging occasions in on duration of the network device; and monitor a paging message on the paging occasion by using the communication unit.

According to a tenth aspect, this application further provides a communication apparatus. The communication apparatus has a function of implementing any method provided in the second aspect, the fourth aspect, the sixth aspect, or the eighth aspect. The communication apparatus may be implemented by hardware, or may be implemented by executing corresponding software by hardware. The hardware or the software includes one or more units or modules corresponding to the foregoing function.

In a possible design, the communication apparatus includes a processor, and the processor is configured to support the communication apparatus in performing a corresponding function of the network device in the foregoing method. The communication apparatus further includes a memory, and the memory may be coupled to the processor, and stores program instructions and data that are necessary for the communication apparatus. Optionally, the communication apparatus further includes an interface circuit, and the interface circuit is configured to support communication between the communication apparatus and a terminal device.

For example, the communication apparatus has a function of implementing the method provided in the second aspect. The processor may be configured to: send, through the interface circuit, first information indicating a sleep cycle of the network device; determine a paging frame based on the sleep cycle; and send a paging message on the paging frame through the interface circuit.

The communication apparatus has a function of implementing the method provided in the fourth aspect. The processor may be configured to: determine a paging occasion based on an identifier of the terminal device; and send a paging message on the paging occasion through the interface circuit, where if the terminal device runs in a network energy saving mode, a quantity of bits of the identifier of the terminal device is greater than a quantity of bits for the terminal device that does not run in the network energy saving mode.

The communication apparatus has a function of implementing the method provided in the sixth aspect. The processor may be configured to: send a PEI through the interface circuit, where the PEI indicates a total quantity of paging occasions on which monitoring needs to be performed in a paging cycle; determine a paging occasion based on the total quantity indicated by the PEI; and send a paging message on the paging occasion through the interface circuit.

The communication apparatus has a function of implementing the method provided in the eighth aspect. The processor may be configured to: send a system message through the interface circuit, where the system message indicates a total quantity Ns of paging occasions on which monitoring needs to be performed in a paging cycle; determine a paging occasion based on Ns and a total quantity N0 of paging occasions in on duration of the network device; and send a paging message on the paging occasion through the interface circuit.

In a possible design, the communication apparatus includes corresponding function modules respectively configured to implement the steps in the foregoing methods. The function may be implemented by hardware, or may be implemented by executing corresponding software by hardware. The hardware or the software includes one or more modules corresponding to the foregoing function.

In a possible design, a structure of the communication apparatus includes a processing unit (or a processing module) and a communication unit (or a first communication module). These units may perform corresponding functions in the foregoing method examples. For details, refer to the descriptions in the method provided in the second aspect, the fourth aspect, the sixth aspect, or the eighth aspect. Details are not described herein again.

For example, the communication apparatus has a function of implementing the method provided in the second aspect. The processing unit may be configured to: send, by using the communication unit, first information indicating a sleep cycle of the network device; determine a paging frame based on the sleep cycle; and send a paging message on the paging frame by using the communication unit.

The communication apparatus has a function of implementing the method provided in the fourth aspect. The processing unit may be configured to: determine a paging occasion based on an identifier of the terminal device; and send a paging message on the paging occasion by using the communication unit, where if the terminal device runs in a network energy saving mode, a quantity of bits of the identifier of the terminal device is greater than a quantity of bits for the terminal device that does not run in the network energy saving mode.

The communication apparatus has a function of implementing the method provided in the sixth aspect. The processing unit may be configured to send a PEI by using the communication unit, where the PEI indicates a total quantity of paging occasions on which monitoring needs to be performed in a paging cycle; determine a paging occasion based on the total quantity indicated by the PEI; and send a paging message on the paging occasion by using the communication unit.

The communication apparatus has a function of implementing the method provided in the eighth aspect. The processing unit may be configured to: send a system message by using the communication unit, where the system message indicates a total quantity Ns of paging occasions on which monitoring needs to be performed in a paging cycle; determine a paging occasion based on Ns and a total quantity N0 of paging occasions in on duration of the network device; and send a paging message on the paging occasion by using the communication unit.

According to an eleventh aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in the first aspect, the third aspect, the fifth aspect, or the seventh aspect and any possible design by using a logic circuit or by executing code instructions.

According to a twelfth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in the second aspect, the fourth aspect, the sixth aspect, or the eighth aspect and any possible design by using a logic circuit or by executing code instructions.

According to a thirteenth aspect, a computer-readable storage medium is provided. The computer-readable storage medium stores a computer program or instructions. When the computer program or the instructions are executed by a processor, the method in any one of the first aspect to the eighth aspect and the possible designs is implemented.

According to a fourteenth aspect, a computer program product storing instructions is provided. When the instructions are run by a processor, the method in any one of the first aspect to the eighth aspect and the possible designs is implemented.

According to a fifteenth aspect, a chip system is provided. The chip system includes a processor, and may further include a memory, configured to implement the method in any one of the first aspect or the second aspect and the possible designs. The chip system may include a chip, or may include a chip and another discrete component.

According to a sixteenth aspect, a communication system is provided. The system includes the apparatus (for example, a terminal device) in the first aspect and the apparatus (for example, a network device) in the second aspect.

According to a seventeenth aspect, a communication system is provided. The system includes the apparatus (for example, a terminal device) in the third aspect and the apparatus (for example, a network device) in the fourth aspect.

According to an eighteenth aspect, a communication system is provided. The system includes the apparatus (for example, a terminal device) in the fifth aspect and the apparatus (for example, a network device) in the sixth aspect.

According to a nineteenth aspect, a communication system is provided. The system includes the apparatus (for example, a terminal device) in the seventh aspect and the apparatus (for example, a network device) in the eighth aspect.

BRIEF DESCRIPTION OF DRAWINGS

FIG. 1 is a diagram of a structure of a network device according to an embodiment of this application;
FIG. 2 is a diagram of paging according to an embodiment of this application;
FIG. 3 is a diagram of an architecture of a network system according to an embodiment of this application;
FIG. 4 is a schematic flowchart of a communication method according to an embodiment of this application;
FIG. 5 is a diagram of an effect of PF aggregation according to an embodiment of this application;
FIG. 6 is a diagram of an effect of PF aggregation according to an embodiment of this application;
FIG. 7 is a diagram of an effect of PF aggregation according to an embodiment of this application;
FIG. 8 is a diagram of an effect of PF aggregation according to an embodiment of this application;
FIG. 9 is a schematic flowchart of a communication method according to an embodiment of this application;
FIG. 10 is a schematic flowchart of a communication method according to an embodiment of this application;
FIG. 11 is a schematic flowchart of a communication method according to an embodiment of this application;
FIG. 12 is a diagram of an architecture of a communication apparatus according to an embodiment of this application; and
FIG. 13 is a diagram of an architecture of a communication apparatus according to an embodiment of this application.

DESCRIPTION OF EMBODIMENTS

To make objectives, technical solution, and advantages of embodiments of this application clearer, the following further describes embodiments of this application in detail with reference to accompanying drawings.

The following describes some terms in embodiments of this application, to facilitate understanding of a person skilled in the art.

1. Terminal device: may be a device having a wireless transceiver function or a chip that can be disposed in any device, or may be referred to as a user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in embodiments of this application may be a mobile phone (mobile phone), a tablet (Pad), a computer having the wireless transceiver function, an XR device (such as a VR device, an AR device, or an MR device), a wireless terminal in industrial control (industrial control), a wireless terminal in self-driving (self-driving), a wireless terminal in video surveillance, a wearable terminal device, or the like. Alternatively, the terminal device may be an eMBB UE, a URLLC UE, an uncrewed aerial vehicle, another internet of things (internet of things, IoT) device, a positioning device, or the like.

A network device may be an apparatus configured to implement a function of an access network device. The access network device may be a device that communicates with a wireless terminal device over an air interface in an access network by using one or more cells. For example, the access network device may be a next generation NodeB (next Generation NodeB, gNB) in an NR system, an evolved NodeB (evolved NodeB, eNB) in a long term evolution (long term evolution, LTE) system, or the like. Alternatively, the network device may be an apparatus that can support the network device in implementing the function of the access network device, for example, a chip system. The apparatus may be mounted in the network device.

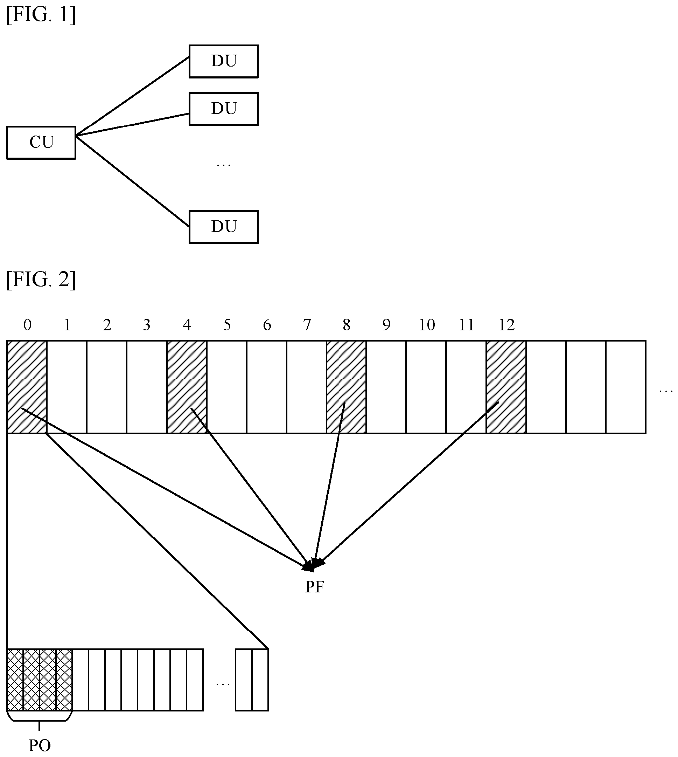

For example, a structure of the network device in embodiments of this application may be shown in FIG. 1. Specifically, the network device may be divided into a central unit (central unit, CU) and at least one distributed unit (distributed unit, DU). The CU may be configured to manage or control the at least one DU. In other words, the CU is connected to the at least one DU. In this structure, protocol layers of the network device in a communication system may be separated, a part of the protocol layers is controlled by the CU in a centralized manner, and functions of a part or all of remaining protocol layers are distributed in the DU. The CU controls the DU in a centralized manner. For example, the network device is a gNB. Protocol layers of the gNB include a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) sublayer, and a physical layer. For example, the CU may be configured to implement functions of the RRC layer, the SDAP layer, and the PDCP layer, and the DU may be configured to implement functions of the RLC layer, the MAC layer, and the physical layer. Protocol stacks included in the CU and the DU are not specifically limited in embodiments of this application.

2. Network energy saving mode: With gradual evolution of communication systems, "low carbon" in communication networks is increasingly concerned. In particular, how to reduce energy consumption of a network device is increasingly concerned. One of main technical means for reducing the energy consumption of the network device is to cause the network device to perform discontinuous transmission (discontinuous transmission, DTX) and/or discontinuous reception (discontinuous reception, DRX). The DTX means that the network device may alternately perform sending and not perform sending in time domain, or may be understood as that the network device cyclically enters a sleep period, and the network device may not perform sending in the sleep period. The DRX means that the network device may alternately perform receiving and not perform receiving in time domain, or may be understood as that the network device regularly enters sleep, and the network device may not perform receiving in a sleep period. In this case, the network device may sleep in a time period in which sending and/or receiving are/is not performed, to save energy of the network device.

The network energy saving mode in this application may be understood as a mode in which the network device performs DRX and/or DTX, or may be understood as a mode in which the network device regularly enters sleep. Each cycle of the network energy saving mode may include on duration of the network device and a sleep period of the network device. In the on duration of the network device, the network device performs sending and/or receiving, and in the sleep period of the network device, the network device may not perform sending and/or not perform receiving. A cycle in which sleep regularly occurs may be referred to as a sleep cycle.

It should be understood that the foregoing "network sleep mode", "sleep period", and "sleep cycle" are merely example names, and are not specifically limited herein.

3. Paging early indication (paging early indication, PEI)

Currently, an issue of energy saving of terminal devices is discussed. It is considered that, if one of terminal devices that monitor a same PO is paged, all the terminal devices are indicated to receive paging messages. For a terminal device that is actually not paged, receiving the paging messages causes unnecessary power consumption. For this problem, a possible solution is grouping terminal devices belonging to a same PO into a subgroup. A network pages terminal devices based on a subgroup granularity, so that a paging false alarm probability is reduced, thereby reducing unnecessary power consumption for paging receiving of the terminal device. Specifically, the PEI is introduced to indicate a paged terminal device subgroup before the PO.

Manners of determining the subgroup to which the terminal device belongs include the following two manners:

Core network controlled subgrouping (CN controlled subgrouping): A core network device allocates the subgroup to the terminal device, and sends a terminal device subgroup ID to the network device and the terminal device separately. Implementation of terminal device subgroup allocation depends on the core network device, for example, based on a paging probability of the terminal device.

UE_ID-based subgrouping (UE ID-based subgrouping): A calculation method for a terminal device subgroup ID subgroup ID is: k=[floor (UE_ID/(N*Ns)) mod Nsg-UEID]+Nsg-CN.

Nsg-UEID is a total quantity of subgroups broadcast in a system message, the quantity of subgroups is a total quantity of subgroups grouped based on UE_ID in a single PO when it is assumed that a paging message corresponding to the PO includes a plurality of terminal devices, and Nsg-CN is a total quantity of subgroups allocated based on core network control in the single PO.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

Unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, a first communication device and a second communication device are merely used to distinguish between different communication devices, but do not indicate different positions, communication capabilities, priorities, importance degrees, or the like of the two communication devices.

The foregoing describes some terms in embodiments of this application. The following describes technical features in embodiments of this application.

In a system like an NR system, a terminal device in an RRC idle state or an RRC inactive state may regularly wake up to monitor a paging message in a DRX manner. A regular wake-up cycle may be referred to as a DRX cycle, and a wake-up position is referred to as a PO. The PO is in a paging frame or a start position of the PO is in the PF. For example, in long term evolution (long term evolution, LTE), one PF includes 10 subframes, and indexes are sequentially 0 to 9. A time domain position of the PO may be a subframe whose index is 7 in the PF. In NR, the PO is a set of physical downlink control channel (physical downlink control channel, PDCCH) monitoring occasions (monitoring occasions), and is obtained based on corresponding search space. The PO is in the paging frame or the start position of the PO is in the paging frame.

The terminal device may determine the PF according to the following formula:

$$\text{SFN mod } T = (T \text{ div } N)*(UE\_ID \text{ mod } N) \quad \text{Formula (1)}$$

The SFN is a system frame number (system frame number) of the PF.

T is a paging cycle, or may be referred to as a DRX cycle or a DRX paging cycle. A network device may send a default DRX configuration of a network to the UE by using an SIB1. Therefore, a default DRX cycle configured by the SIB1 (default DRX cycle configured by SIB1) always exists. If the terminal device does not need to use a specific DRX configuration, the terminal device may use the default DRX cycle configured by the SIB1.

If the terminal device needs to use a specific DRX configuration, for example, a shorter DRX cycle, the terminal device may perform DRX configuration negotiation with a core network by using non-access stratum (non-access stratum, NAS) signaling, where the DRX configuration may include a specific DRX cycle. The terminal device may monitor the paging message by using a min{specific DRX cycle configured by the core network (specific DRX cycle configured by CN), default DRX cycle configured by the SIB1} cycle.

If the terminal device needs to use a specific non-connected-state DRX configuration, for example, a shorter DRX cycle, the network device may provide a specific DRX cycle when releasing the terminal device to a non-connected state. The terminal device may monitor the paging message by using a min{specific DRX cycle configured by the CN if configured, default DRX cycle configured by the SIB1, specific DRX cycle configured by an access network (specific DRX cycle configured by RAN)} cycle. The non-connected state in this application may include an inactive state and an idle state.

For ease of description, T is collectively referred to as a paging cycle in the following.

N is a quantity of PFs in one paging cycle.

UE_ID is an identifier of a terminal device.

mod is a modulo operation.

div is an exact division operation.

For an NR terminal device, an additional offset Framoffset may be further considered as follows:

$$(\text{SFN} + \text{Framoffset}) \text{ mod } T = (T \text{ div } N)*(UE\_ID \text{ mod } N) \quad \text{Formula (2)}$$

Framoffset may be broadcast by using system information.

The terminal device may determine an index value $i\_s$ of a PO according to the following formula:

$$i\_s = \text{floor } (UE\_ID/N) \text{ mod } Ns \quad \text{Formula (3)}$$

$i\_s$ is an index number of the PO, floor is a floor operation, and Ns is a total quantity of POs in a paging cycle.

With gradual evolution of communication systems, how to reduce energy consumption of a network device is increasingly concerned. One of main technical means for reducing the energy consumption of the network device is to cause the network device to be in a network energy saving mode when the network device is unloaded and lightly loaded. In this case, the network device may sleep in a time period in which sending and receiving are not performed, to save energy. However, in the foregoing manner of determining the PF by the terminal device, the network device needs to wake up frequently. For example, assuming that N=T/4 and Ns=4, according to the foregoing formula, potential PFs are 0, 4, 8, 12, .... Subscripts corresponding to potential POs in each PF are 0, 1, 2, and 3, as shown in FIG. 2. Therefore, the network device needs to wake up on radio frames whose SFNs are 0, 4, 8, 12, ..., resulting in a poor energy saving effect of the network device.

In view of this, this application provides a communication method and apparatus, to improve the energy saving effect of the network device. The method and the apparatus are based on a same inventive concept. Because the method and the apparatus have a similar problem-resolving principle, for implementations of the apparatus and the method, refer to each other, and no repeated description is provided.

The communication method provided in this application may be applied to various communication systems, for example, an internet of things (internet of things, IoT), a narrowband internet of things (narrowband internet of things, NB-IoT), long term evolution (long term evolution, LTE), a 5th generation (5G) communication system, an LTE and 5G hybrid architecture, a 5G new radio (new radio, NR) system, and a 6G system or a new communication system emerging in future communication development. The 5G communication system in this application may include at least one of a non-standalone (non-standalone, NSA) 5G communication system and a standalone (standalone, SA) 5G communication system. The communication system may alternatively be a machine to machine (machine to machine, M2M) network or another network.

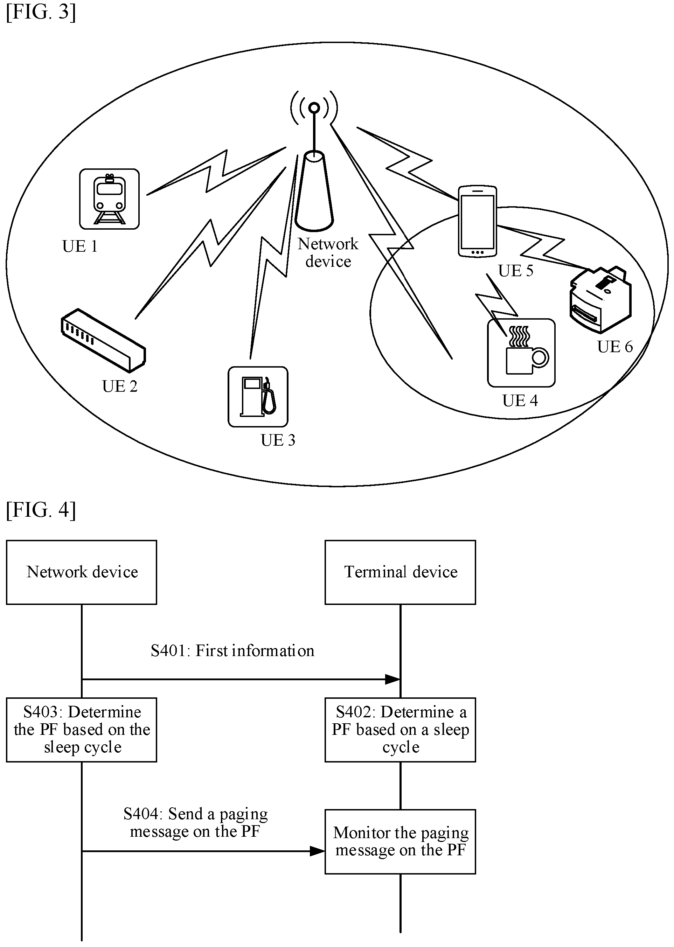

FIG. 3 shows a communication system according to an embodiment of this application. The communication system includes one network device and six terminal devices, namely, a UE 1 to a UE 6. In the communication system, the UE 1 to the UE 6 may send uplink data to the network device, and the network device may receive the uplink data sent by the UE 1 to the UE 6. In addition, the UE 4 to the UE 6 may also form a communication subsystem. The network device may send downlink information to the UE 1, the UE 2, the UE 3, and the UE 5, and the UE 5 may send the downlink information to the UE 4 and the UE 6 based on a device-to-device (device-to-device, D2D) technology. FIG. 3 is merely a diagram, and a type of a communication system, a quantity of devices included in the communication system, a type of a device included in the communication system, and the like are not specifically limited.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

FIG. 4 is a schematic flowchart of a communication method according to this application. The method includes the following steps.

S401: A network device sends first information. Correspondingly, a terminal device receives the first information.

The first information indicates a sleep cycle of the network device.

For example, the first information may be carried in a system message broadcast by the network device, or may be carried in a unicast message sent by the network device to the terminal device. This is not specifically limited herein.

With reference to a specific embodiment, the following describes a manner in which the first information indicates the sleep cycle.

S402: The terminal device determines a PF based on the sleep cycle.

S403: The network device determines the PF based on the sleep cycle.

It should be noted that an execution sequence of S402 and S403 is not limited in this application.

S404: The network device sends a paging message on the PF. Correspondingly, the terminal device monitors the paging message on the PF.

It should be understood that a manner of determining the PF by the terminal device is consistent with a manner of determining the PF by the network device. The following uses the terminal device as an example to describe the manner of determining the PF. For the manner of determining the PF by the network device, refer to the manner of determining the PF by the terminal device.

In this embodiment of this application, the terminal device and the network device determine the PF based on the sleep cycle of the network device, to extend an interval between PFs. For example, PFs may be concentrated in on duration of the network device. In this way, a quantity of times that the network device wakes up can be reduced, and an energy saving effect of the network device can be improved.

In this embodiment of this application, the first information may directly indicate the sleep cycle of the network device, or may indirectly indicate the sleep cycle of the network device

Specifically, a possible direct indication manner is that the first information is the sleep cycle T1. In this manner, the network device may send the sleep cycle of the network device to the terminal device. For example, the network device may include the sleep cycle of the network device in a broadcast message.

In this manner, a sleep cycle parameter of the network device is introduced, so that the network device and the terminal device may determine the PF based on the sleep cycle of the network device. In this way, PFs may be concentrated in the on duration of the network device, thereby reducing the quantity of times that the network device wakes up, and improving the energy saving effect of the network device.

In the foregoing manner, when determining the PF, the terminal device may determine the PF based on the sleep cycle and a paging cycle.

In an example, the terminal device may determine an SFN of the PF based on a maximum value between the sleep cycle and the paging cycle.

For example, the SFN of the PF may satisfy the following formula:

$$A \bmod \max(T1, T) = 0 \quad \text{Formula (4)}$$

A is determined based on the SFN. For example, A=SFN; or A=SFN+offset, where the offset is an offset of the system frame number. In this application, the offset may be the offset Framoffset, in the background, used for the NR terminal device to determine the PF, or may be another offset, for example, may be an offset introduced for a network energy saving mode. The offset and the first information may be carried in a same message, or may be carried in different messages.

If A=SFN, the foregoing Formula (4) may be expressed as: SFN mod max(T1, T)=0. If A=SFN+offset, the foregoing Formula (4) may be expressed as: (SFN+offset) mod max(T1, T)=0, or may be expressed as: SFN mod max(T1, T)=0. In an implementation in which the offset is the offset Framoffset, in the background, used for the NR terminal device to determine the PF, the foregoing Formula (4) may be expressed as: (SFN+Framoffset) mod max(T1, T)=0, or may be expressed as: SFN mod max(T1, T)=Framoffset.

This application does not limit expression forms of the foregoing Formula (4) and the following Formulas (5) to (8). The expressions listed in this application are merely examples. During specific implementation, the expressions may be further applied to other variations of Formulas (4) to (8). Details are not listed one by one herein.

Alternatively, it may be understood as that, if the sleep cycle is greater than the paging cycle, the SFN of the PF may satisfy the following formula: A mod T1=0. If the sleep cycle is less than the paging cycle, the SFN of the PF may satisfy the following formula: A mod T=0.

The following describes a paging manner in this application with reference to two examples.

Example 1: It is assumed that A=SFN+offset, T=32, T1=64, N=4/T, Framoffset=2, and offset=0. The following describes the paging manner in this application with reference to specific examples.

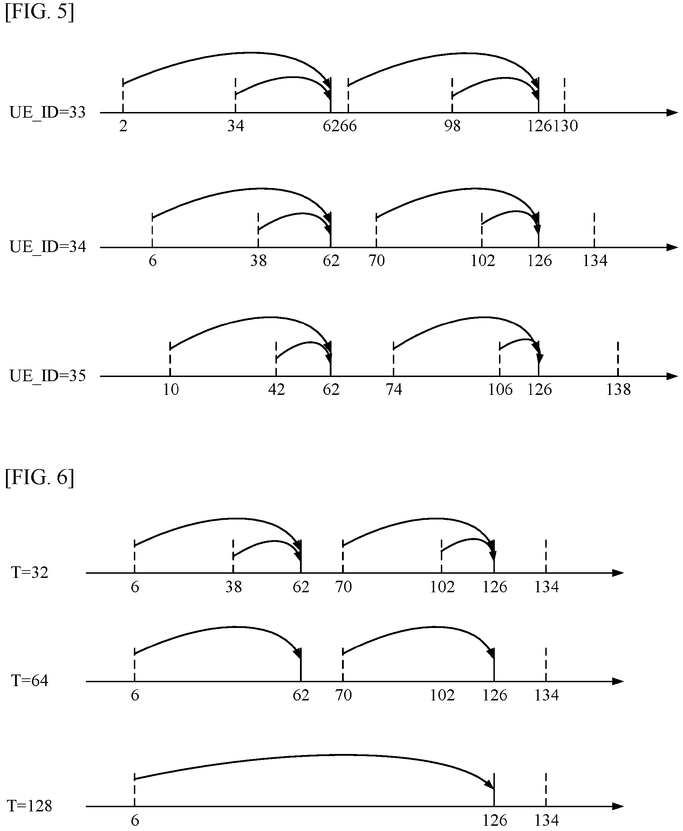

As shown in FIG. 5, for a terminal device whose UE_ID is 33, according to Formula (2): (SFN+Framoffset) mod T=(T div N)*(UE_ID mod N) in the background, it may be determined that SFNs of PFs are 2, 34, 66, 98, 130, and the like. However, according to the foregoing Formula (4): A mod max(T1, T)=0, it may be determined that SFNs of PFs are 62, 126, and the like.

For a terminal device whose UE_ID is 34, according to Formula (2): (SFN+Framoffset) mod T=(T div N)*(UE_ID mod N) in the background, it may be determined that SFNs of PFs are 6, 38, 70, 102, 134, and the like. However, according to the foregoing Formula (4): A mod max(T1, T)=0, it may be determined that SFNs of PFs are 62, 126, and the like.

For a terminal device whose UE_ID is 35, according to Formula (2): (SFN+Framoffset) mod T=(T div N)*(UE_ID mod N) in the background, it may be determined that SFNs of PFs are 10, 42, 74, 106, 138, and the like. However, according to the foregoing Formula (4): A mod max(T1, T)=0, it may be determined that SFNs of PFs are 62, 126, and the like.

It can be learned that, if the paging method described in the background is used, for different terminal devices, the network device needs to wake up on PFs corresponding to all the terminal devices. To be specific, the network device needs to wake up on PFs corresponding to the terminal device whose UE_ID is 33, that is, the PFs whose SFNs are 2, 34, 66, 98, and 130, further needs to wake up on PFs corresponding to the terminal device whose UE_ID is 34, that is, the PFs whose SFNs are 6, 38, 70, 102, and 134, and further needs to wake up on PFs corresponding to the terminal device whose UE_ID is 35, that is, the PFs whose SFNs are 10, 42, 74, 106, and 138. However, according to the method in this application, the network device may wake up on the PFs whose SFNs are 62 and 126. It can be learned that, in this embodiment of this application, PFs of different terminal devices can be aggregated to a same PF, so that the quantity of times that the network device wakes up can be reduced, and the energy saving effect of the network device can be improved.

Example 2: It is assumed that A=SFN+offset, UE_ID=34, T1=64, N=4/T, Framoffset=2, and offset=0. The following describes the paging manner in this application with reference to specific examples.

As shown in FIG. 6, if T=32, according to Formula (2): (SFN+Framoffset) mod T=(T div N)*(UE_ID mod N) in the background, it may be determined that SFNs of PFs are 6, 38, 70, 102, 134, and the like. However, according to the foregoing Formula (4): A mod max(T1, T)=0, it may be determined that SFNs of PFs are 62, 126, and the like.

If T=64, according to Formula (2): (SFN+Framoffset) mod T=(T div N)*(UE_ID mod N) in the background, it may be determined that SFNs of PFs are 6, 70, 134, and the like. However, according to the foregoing Formula (4): A mod max(T1, T)=0, it may be determined that SFNs of PFs are 62, 126, and the like.

If T=128, according to Formula (2): (SFN+Framoffset) mod T=(T div N)*(UE_ID mod N) in the background, it may be determined that SFNs of PFs are 6, 134, and the like. However, according to the foregoing Formula (4): A mod max(T1, T)=0, it may be determined that an SFN of a PF is 126, and the like.

It can be learned that, if the paging method described in the background is used, for different paging cycles, the network device needs to wake up on different PFs. To be specific, when T=32, the network device needs to wake up on the PFs whose SFNs are 6, 38, 70, 102, and 134; when T=64, the network device needs to wake up on the PFs whose SFNs are 62 and 126; and when T=128, the network device needs to wake up on the PF whose SFN is 126. However, according to the method in this application, for different paging cycles, the network device may wake up on PFs/a PF whose SFNs/SFN are/is 62 and/or 126. It can be learned that, in this embodiment of this application, PFs in different paging cycles can be aggregated to a same PF, for example, 62 or 126, so that the quantity of times that the network device wakes up can be reduced, and the energy saving effect of the network device can be improved.

In another example, if the sleep cycle T1 is less than or equal to the paging cycle T, the terminal device may determine a quantity N' of PFs based on the sleep cycle and the paging cycle, and determine an SFN of the PF based on N'.

For example, N' may satisfy the following formula:

$$N'=T \text{ div } T1$$

div is an exact division operation.

The SFN of the PF may satisfy the following formula:

$$A \bmod T = T1^*(UE\_ID \bmod N') \quad \text{Formula (5)}$$

If A=SFN, the foregoing Formula (5) may be expressed as: SFN mod T=T1*(UE_ID mod N'). If A=SFN+offset, the foregoing Formula (5) may be expressed as: (SFN+offset) mod T=T1*(UE_ID mod N'), or may be expressed as: SFN mod T=T1*(UE_ID mod N')+offset. In an implementation in which the offset is the offset Framoffset, in the background, used for the NR terminal device to determine the PF, the foregoing Formula (5) may be expressed as: (SFN+Framoffset) mod T=T1*(UE_ID mod N'), or may be expressed as: SFN mod T=T1*(UE_ID mod N')+Framoffset.

For example, it is assumed that A=SFN+offset, T=128, T1=64, N=T/4, Framoffset=2, and offset=2. The following describes a paging manner in this application with reference to specific examples.

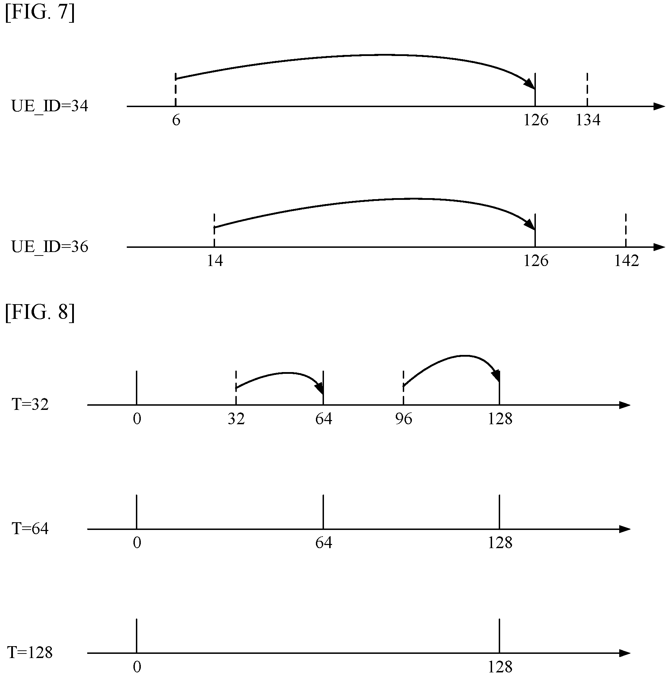

As shown in FIG. 7, for a UE 2 whose UE_ID is 34, according to Formula (2): (SFN+Framoffset) mod T=(T div N)* (UE_ID mod N) in the background, it may be determined that SFNs of PFs are 6, 128+6=134, and the like. However, according to the foregoing Formula (5): A mod T=T1*(UE_ID mod N'), it may be determined that an SFN of a PF is 126, and the like.

For a UE 3 whose UE_ID is 36, according to Formula (2): (SFN+Framoffset) mod T=(T div N)*(UE_ID mod N) in the background, it may be determined that SFNs of PFs are 14, 128+14=142, and the like. However, according to the foregoing Formula (5): A mod T=T1*(UE_ID mod N'), it may be determined that an SFN of a PF is 126, and the like.

It can be learned that, if the paging method described in the background is used, for different terminal devices, the network device needs to wake up on PFs corresponding to all the terminal devices. To be specific, the network device needs to wake up on PFs corresponding to the terminal device whose UE_ID is 34, that is, the PFs whose SFNs are 6 and 134, and further needs to wake up on PFs corresponding to the terminal device whose UE_ID is 36, that is, the PFs whose SFNs are 14 and 142. However, according to the method in this application, the network device may wake up on the PF whose SFN is 126. It can be learned that, in this embodiment of this application, PFs of different terminal devices can be aggregated to a same PF, so that the quantity of times that the network device wakes up can be reduced, and the energy saving effect of the network device can be improved.

In a possible indirect indication manner, the first information indicates a quantity N of PFs, where N is less than T/16, T is a paging cycle, and N is used for determining the sleep cycle. In this manner, a candidate value of N is added, so that the sleep cycle of the network device can be extended, the quantity of times that the network device wakes up can be reduced, and the energy saving effect of the network device can be improved.

For example, an SFN of the PF may satisfy the following formula:

$$A \bmod T2 = T1^*(UE\_ID \bmod T2/T1) \quad \text{Formula (6)}$$

T2=max(T1, T), and UE_ID is an identifier of the terminal device.

The foregoing Formula (6) may also be expressed as: A mod T2=(T2 div T2/T1)*(UE_ID mod T2/T1).

If A=SFN, the foregoing Formula (6) may be expressed as: SFN mod T2=T1*(UE_ID mod T2/T1), or SFN mod T2=(T2 div T2/T1)*(UE_ID mod T2/T1). If A=SFN+offset, the foregoing Formula (6) may be expressed as: (SFN+offset) mod T2=T1*(UE_ID mod T2/T1), or (SFN+offset) mod T2=(T2 div T2/T1)*(UE_ID mod T2/T1). Alternatively, the foregoing Formula (6) may be expressed as: SFN mod T2=T1*(UE_ID mod T2/T1)+offset, or SFN mod T2=(T2 div T2/T1)*(UE_ID mod T2/T1)+offset.

In an implementation in which the offset is the offset Framoffset, in the background, used for the NR terminal device to determine the PF, the foregoing Formula (6) may be expressed as: (SFN+Framoffset) mod T2=T1*(UE_ID mod T2/T1), or (SFN+Framoffset) mod T2=(T2 div T2/T1)*(UE_ID mod T2/T1). Alternatively, the foregoing Formula (6) may be expressed as: SFN mod T2=T1*(UE_ID mod T2/T1)+Framoffset, or SFN mod T2=(T2 div T2/T1)*(UE_ID mod T2/T1)+Framoffset.

In this manner, it is assumed that A=SFN+offset, where the offset is equal to Frameoffset, that is, A=SFN+Frameoffset. If N=T/4 or T/16, it may be determined that the sleep cycle T1 is 4 or 16. Because T≥32>T1, T2=max(T1, T)=T. T2 is substituted into the foregoing Formula (6) to obtain (SFN+Framoffset) mod T=(T div N)*(UE_ID mod N). It can be learned that, when N=T/4 or T/16, the foregoing Formula (6) is the same as Formula (2) in the background. Therefore, when T1 is less than T, backward compatibility may be implemented.

In this manner, it is assumed that A=SFN. If N=T/64, it may be determined that the sleep cycle T1 is 64.

As shown in FIG. 8, for a terminal device whose UE_ID is 34, if T=32, T2=max(T1, T)=T1=64. According to the foregoing Formula (6): A mod T2=(T2 div T2/T1)*(UE_ID mod T2/T1), it may be determined that SFNs of PFs are 0, 64, 128, and the like. However, according to Formula (1) in the background, it may be determined that SFNs of PFs are 0, 32, 64, 96, 128, and the like.

If T=64, T2=max(T1, T)=T1 or T=64. According to the foregoing Formula (6): A mod T2=(T2 div T2/T1)*(UE_ID mod T2/T1), it may be determined that SFNs of PFs are 0, 64, 128, and the like. However, according to Formula (1) in the background, it may be determined that SFNs of PFs are 0, 64, 128, and the like.

If T=128, T2=max(T1, T)=T=128. According to the foregoing Formula (6): A mod T2=(T2 div T2/T1)*(UE_ID mod T2/T1), it may be determined that SFNs of PFs are 0, 128, and the like. However, according to Formula (1) in the background, it may be determined that SFNs of PFs are 0, 128, and the like.

According to the foregoing examples, for different paging cycles, the network device may wake up on PFs/a PF whose SFNs/SFN are/is 64 and/or 128. It can be learned that, in this embodiment of this application, PFs in different paging cycles can be aggregated to a same PF, for example, 64 or 128, so that the quantity of times that the network device wakes up can be reduced, and the energy saving effect of the network device can be improved.

Optionally, in this embodiment of this application, before determining the PF in the manner of S401 to S405, the network device and the terminal device may first perform capability negotiation. For example, the terminal device may report capability information to the network device or a core network device, where the capability information indicates that the terminal device supports a network energy saving mode.

In a specific implementation, the terminal device may report the capability information in a connected state, where the capability information indicates that the terminal device supports the network energy saving mode. After reporting the capability information, the terminal device may be released to a non-connected state. Optionally, before being released to the non-connected state, the terminal device may further obtain the paging cycle T. For details, refer to the related descriptions of T in the background. The details are not described herein again.

For example, the terminal device may report the capability information to the core network device, where the capability information indicates that the terminal device supports the network energy saving mode. When paging the terminal device, the core network device may send a paging message on a core network side to the network device. The paging message may carry the capability information. In this way, the network device may obtain the capability information of the terminal device.

In a network device of a DU-CU architecture, after receiving the paging message from the core network side, a CU may send the capability information carried in the paging message to a DU, so that the DU may determine whether to enable the network energy saving mode.

In a possible implementation, after determining that the terminal device supports the network energy saving mode, the network device may enable the network energy saving mode.

In addition, after enabling the network energy saving mode, the network device may send second information to the terminal device, where the second information indicates that the network device enables the network energy saving mode. Optionally, a terminal device that does not support the network energy saving mode may be barred from accessing a cell.

In an example, the network device may indicate the second information by using a PEI. In this manner, notification may be performed for a single UE (per UE). In comparison with a manner of indicating the second information by using a system message, this indication manner is more flexible.

Optionally, when the network device and the terminal device perform paging by using the method in FIG. 4, the paging method in the background may be further used. That is, the PF is determined according to Formula (1) or Formula (2), and a PO is determined according to Formula (3).

In this embodiment of this application, the PF is determined based on the sleep cycle of the network device. In this way, PFs of different terminal devices can be aggregated to a same PF, for example, as shown in FIG. 5 or FIG. 7, or PFs in different paging cycles are aggregated, for example, as shown in FIG. 6 or FIG. 8. Therefore, the quantity of times that the network device wakes up can be reduced, and the energy saving effect of the network device can be improved.

The foregoing describes PF aggregation methods, and the following describes three PO aggregation methods. Any one of the following PO aggregation methods and the PF aggregation method described in FIG. 3 may be combined as one solution for implementation, or may be separately implemented as two independent solutions.

Method 1:

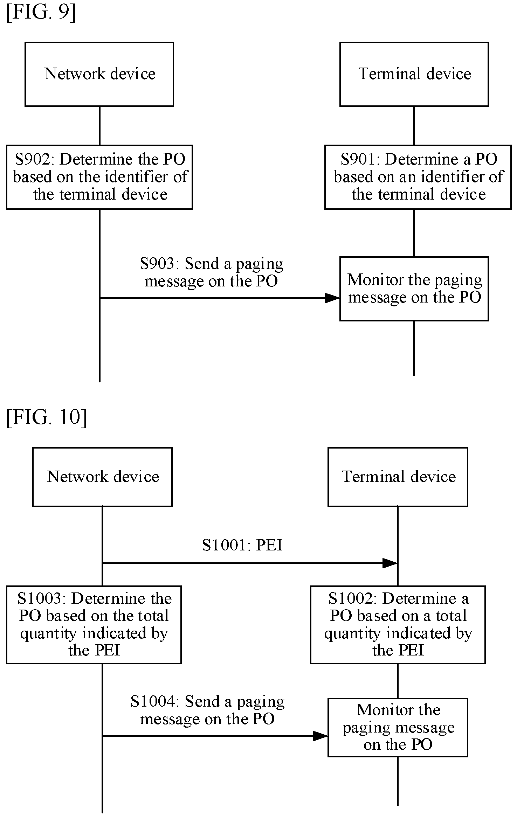

FIG. 9 is a schematic flowchart of a communication method according to this application. The method includes the following steps.

S901: A terminal device determines a PO based on an identifier of the terminal device.

If the terminal device runs in a network energy saving mode, a quantity of bits of the identifier of the terminal device is greater than a quantity of bits for the terminal device that does not run in the network energy saving mode.

In this application, to reduce paging load in a PF, more POs may be introduced. That is, a quantity of Ns is increased. However, currently, a maximum value of UE_ID is 1024 (that is, 10 bits), and according to Formula (3) in the background, a maximum value of the quantity of Ns is 4. In this application, the quantity of bits of the identifier of the terminal device in the network energy saving mode is increased, so that Ns may be set to a larger value, for example, 8, 16, or 32. In this way, a network device and the terminal device support using more POs to perform paging, thereby reducing the paging load in the PF.

For example, if the terminal device runs in the network energy saving mode, a total quantity of POs in a paging cycle is greater than 4, and the quantity of bits of the identifier of the terminal device is greater than 12. For example, the terminal device runs in the network energy saving mode, UE_ID=5G-S-TMSI mod 4096, and 5G-S-TMSI is a 5G temporary mobile subscription identifier (5G S-temporary mobile subscription identifier) of the terminal device. It should be understood that a mod value 4096 herein is merely an example. During specific implementation, the mod value of the 5G-S-TMSI may be larger. This is not specifically limited herein.

In an example for description, the mod value may be determined based on Ns. For example, a larger Ns value indicates a larger mod value, and a smaller Ns value indicates a smaller mod value.

In a specific example, if the terminal device does not run in the network energy saving mode, UE_ID=5G-S-TMSI mod 1024. If the terminal device runs in the network energy saving mode, UE_ID=5G-S-TMSI mod 4096.

In a possible implementation, the terminal device may determine the PO according to Formula (3) in the background.

S902: The network device determines the PO based on the identifier of the terminal device.

If the terminal device runs in the network energy saving mode, the quantity of bits of the identifier of the terminal device is greater than the quantity of bits for the terminal device that does not run in the network energy saving mode. For details, refer to the related descriptions of the identifier of the terminal device in S901. The details are not described herein again.

It should be noted that an execution sequence of S901 and S902 is not limited in this application.

S903: The network device sends a paging message to the terminal device on the PO. Correspondingly, the terminal device monitors the paging message on the PO.

In a possible implementation, the network device may determine the PO according to Formula (3) in the background.

In this application, the quantity of bits of the identifier of the terminal device is increased, so that the network device and the terminal device can support using more POs to perform paging, for example, in this application, UE_ID=5G-S-TMSI mod 4096. In this way, the quantity of Ns may be greater than 4, thereby reducing the paging load in the PF.

It should be noted that the foregoing extension manner of the identifier of the terminal device may also be applied to another scenario. For example, in a PEI, for example, currently, a terminal device subgroup ID k may satisfy the following formula: k=[floor (UE_ID/(N*Ns)) mod Nsg-UEID]+Nsg-CN. UE_ID=5G-S-TMSI mod X, where X may be 4096 or a larger value. This is not specifically limited herein. In a possible implementation, a value of X may be determined based on Ns.

Method 2:

FIG. 10 is a schematic flowchart of a communication method according to this application. The method includes the following steps.

S1001: A network device sends a PEI. Correspondingly, a terminal device receives the PEI.

The PEI indicates a total quantity of POs that on which monitoring needs to be performed in a paging cycle.

Optionally, the total quantity indicated by the PEI is less than Ns, and Ns is a total quantity, indicated by a system message (for example, a system information block 1 (system information block 1, SIB1) message), of POs that on which monitoring needs to be performed in the paging cycle. In this application, considering that an excessively long PO may occupy sleep duration of the network device, and a quantity of actually arrived paging messages for the UE is small, in this application, the quantity of actually used POs is indicated by the PEI. Because the quantity of actually used POs is less than the quantity of POs indicated by the system message, on duration of the network device is further reduced.

In a possible implementation, the total quantity of POs indicated by the PEI is related to a quantity of terminal devices corresponding to the PEI. For example, a larger quantity of terminal devices corresponding to the PEI indicates a larger total quantity of POs indicated by the PEI, and a smaller quantity of terminal devices corresponding to the PEI indicates a smaller total quantity of POs indicated by the PEI.

S1002: The terminal device determines a PO based on the total quantity indicated by the PEI.

For example, an index number i_s of the PO may satisfy the following formula:

$$i\_s = \text{floor}\,(UE\_ID/N)\ \text{mod}\ Ns'\qquad \text{Formula (7)}$$

Ns' is the total quantity of POs indicated by the PEI.

S1003: The network device determines the PO based on the total quantity indicated by the PEI.

A manner of determining the PO by the network device is the same as a manner of determining the PO by the terminal device. For details, refer to the related descriptions of S1002. The details are not described herein again.

It should be noted that an execution sequence of S1002 and S1003 is not limited in this application.

S1004: The network device sends a paging message on the PO. Correspondingly, the terminal device monitors the paging message on the PO.

In this application, considering that the excessively long PO may occupy the sleep duration of the network device, and the quantity of actually arrived paging messages for the UE is small, in this application, the quantity of actually used POs is allocated based on a quantity of terminal devices in a terminal device subgroup, so that the total quantity of POs can be dynamically adjusted, and POs of different UEs can be aggregated to a same PO, thereby further reducing the on duration of the network device. For example, it is assumed that N=T/4, T=32, Ns is 4, the terminal device subgroup includes four UEs, and UE_IDs of the four UEs are respectively 34, 41, 45, and 49. According to Formula (3) in the background, POs corresponding to the terminal device subgroup include POs whose indexes are 0, 1, and 2. Assuming that the total quantity of POs indicated by the PEI is 2, the POs corresponding to the terminal device subgroup include POs whose indexes are 0 and 1. It can be learned that, according to the method provided in this embodiment of this application, when there is a small quantity of terminal devices in the terminal device subgroup, the POs can be aggregated to a few POs, so that PO overheads can be reduced, and the on duration of the network device can be further reduced.

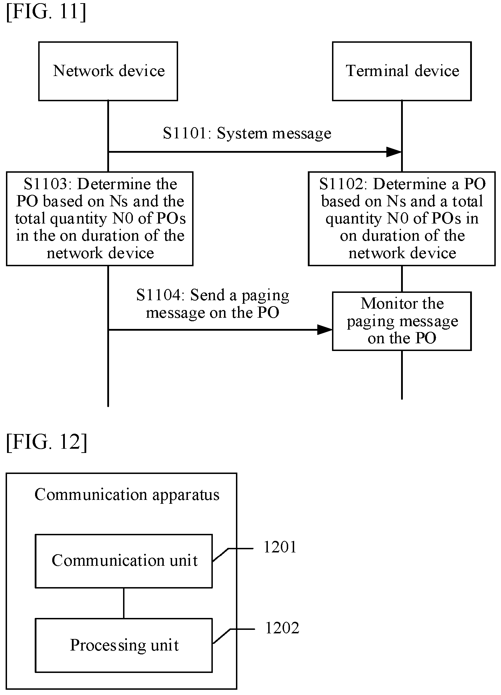

FIG. 11 is a schematic flowchart of a communication method according to this application. The method includes the following steps.

S1101: A network device sends a system message. Correspondingly, a terminal device receives the system message.

The system message indicates a total quantity Ns of POs that on which monitoring needs to be performed in a paging cycle. For example, the system message may be an SIB1.

S1102: The terminal device determines a PO based on Ns and a total quantity N0 of POs in on duration of the network device.

In a possible implementation, the terminal device may determine the PO based on a smaller value between Ns and N0. For example, an index value $i\_s$ of the PO may satisfy the following formula:

$$i\_s = \text{floor}\,(UE\_ID/N)\,\text{mod}\,\min\{N0, Ns\} \quad \text{Formula (8)}$$

S1103: The network device determines the PO based on Ns and the total quantity N0 of POs in the on duration of the network device.

A manner of determining the PO by the network device is the same as a manner of determining the PO by the terminal device. For details, refer to the related descriptions of S1102. The details are not described herein again.

It should be noted that an execution sequence of S1102 and S1103 is not limited in this application.

S1104: The network device sends a paging message on the PO. Correspondingly, the terminal device monitors the paging message on the PO.

In this application, considering that an excessively long PO may occupy sleep duration of the network device, and a total quantity of POs in the on duration of the network device is small, in this application, POs of different UEs can be aggregated to a same PO, to further reduce the on duration of the network device. For example, it is assumed that N=T/4, T=32, Ns=4, N0=2, a terminal device subgroup includes four UEs, and UE_IDs of the four UEs are respectively 34, 41, 45, and 49. According to Formula (3) in the background, POs corresponding to the terminal device subgroup include POs whose indexes are 0, 1, and 2. However, according to the foregoing Formula (8), POs corresponding to the terminal device subgroup include POs whose indexes are 0 and 1. It can be learned that according to the method provided in this embodiment of this application, when there is a small quantity of terminal devices in the terminal device subgroup, POs can be aggregated to a few POs, so that PO overheads can be reduced, and the on duration of the network device can be further reduced.

Based on a same concept as the method embodiments, an embodiment of this application provides a communication apparatus. A structure of the communication apparatus may be shown in FIG. 12. The communication apparatus includes a communication unit 1201 and a processing unit 1202.

In an implementation, the communication apparatus may be specifically configured to implement the method performed by the terminal device in the embodiment in FIG. 4. The apparatus may be the terminal device, or may be a chip or a chip group in the terminal device, or a part of the chip that is configured to perform a related method function. The communication unit 1201 is configured to receive first information, where the first information indicates a sleep cycle of a network device. The processing unit 1202 is configured to determine a paging frame based on the sleep cycle. The communication unit 1201 is further configured to monitor a paging message on the paging frame.

For example, the first information is the sleep cycle T1.

Optionally, the processing unit 1202 may be specifically configured to determine the paging frame based on the sleep cycle and a paging cycle.

For example, when determining the paging frame based on the sleep cycle and the paging cycle, the processing unit 1202 may be specifically configured to determine an SFN of the paging frame based on a maximum value between the sleep cycle and the paging cycle.

For example, the SFN of the paging frame satisfies the following formula:

$$A \bmod \max(T1, T) = 0$$

A is determined based on the SFN, T1 is the sleep cycle, T is the paging cycle, and mod is a modulo operation.

Alternatively, the processing unit 1202 may be specifically configured to: when the sleep cycle is less than or equal to a paging cycle, determine a quantity N' of paging frames based on the sleep cycle and the paging cycle; and determine an SFN of the paging frame based on N'.

For example, N' satisfies the following formula:

$$N' = T \operatorname{div} T1$$

T1 is the sleep cycle, T is the paging cycle, and div is an exact division operation.

For example, the SFN of the paging frame satisfies the following formula:

$$A \bmod T = T1 * (UE\_ID \bmod N')$$

A is determined based on the SFN, T is the paging cycle, T1 is the sleep cycle, and mod is a modulo operation.

For example, the first information is a quantity N of paging frames, N is less than T/16, T is a paging cycle, and N is used for determining the sleep cycle.

For example, an SFN of the paging frame satisfies the following formula:

$$A \bmod T2 = T1 * (UE\_ID \bmod T2/T1)$$

A is determined based on the SFN, T2=max(T1, T), T1 is the sleep cycle, T is the paging cycle, UE_ID is an identifier of the terminal device, mod is a modulo operation, and div is an exact division operation.

For example, A=SFN; or A=SFN+offset, where the offset is an offset of the system frame number.

Optionally, the communication unit 1201 is further configured to report capability information, where the capability information indicates that the terminal device supports a network energy saving mode.

Optionally, the communication unit 1201 is further configured to receive second information, where the second information indicates that the network device enables the network energy saving mode.

In an implementation, the communication apparatus may be specifically configured to implement the method performed by the network device in the embodiment in FIG. 4. The apparatus may be the network device, or may be a chip or a chip group in the network device, or a part of the chip that is configured to perform a related method function. The communication unit 1201 is configured to send first information, where the first information indicates a sleep cycle of a network device. The processing unit 1202 is configured to determine a paging frame based on the sleep cycle. The communication unit 1201 is further configured to send a paging message on the paging frame.

For example, the first information is the sleep cycle T1.

Optionally, the processing unit 1202 may be specifically configured to determine the paging frame based on the sleep cycle and a paging cycle.

For example, when determining the paging frame based on the sleep cycle and the paging cycle, the processing unit 1202 may be specifically configured to determine an SFN of the paging frame based on a maximum value between the sleep cycle and the paging cycle.

For example, the SFN of the paging frame satisfies the following formula:

$$A \bmod \max(T1, T) = 0$$

A is determined based on the SFN, T1 is the sleep cycle, T is the paging cycle, and mod is a modulo operation.

Alternatively, the processing unit 1202 may be specifically configured to: when the sleep cycle is less than or equal to a paging cycle, determine a quantity N' of paging frames based on the sleep cycle and the paging cycle; and determine an SFN of the paging frame based on N'.

For example, N' satisfies the following formula:

$$N'=T \text{ div } T1$$

T1 is the sleep cycle, T is the paging cycle, and div is an exact division operation.

For example, the SFN of the paging frame satisfies the following formula:

$$A \bmod T=T1*(UE\_ID \bmod N')$$

A is determined based on the SFN, T is the paging cycle, T1 is the sleep cycle, and mod is a modulo operation.

For example, the first information is a quantity N of paging frames, N is less than T/16, T is a paging cycle, and N is used for determining the sleep cycle.

For example, an SFN of the paging frame satisfies the following formula:

$$A \bmod T2=T1*(UE\_ID \bmod T2/T1)$$

A is determined based on the SFN, $T2=\max(T1, T)$, T1 is the sleep cycle, T is the paging cycle, UE_ID is an identifier of the terminal device, mod is a modulo operation, and div is an exact division operation.

For example, A=SFN; or A=SFN+offset, where the offset is an offset of the system frame number.

Optionally, the processing unit 1202 is further configured to: determine that the terminal device supports a network energy saving mode; and enable the network energy saving mode.

Optionally, the communication unit 1201 is further configured to:

send second information, where the second information indicates that the network device enables the network energy saving mode.

In an implementation, the communication apparatus may be specifically configured to implement the method performed by the terminal device in the embodiment in FIG. 9. The apparatus may be the terminal device, or may be a chip or a chip group in the terminal device, or a part of the chip that is configured to perform a related method function. The processing unit 1202 is configured to determine a paging occasion based on an identifier of the terminal device, where if the terminal device runs in a network energy saving mode, a quantity of bits of the identifier of the terminal device is greater than a quantity of bits for the terminal device that does not run in the network energy saving mode. The communication unit 1201 is configured to monitor a paging message on the paging occasion.

For example, if the terminal device runs in the network energy saving mode, a total quantity of paging occasions in a paging cycle is greater than 4, and the quantity of bits of the identifier of the terminal device is greater than 12.

In an implementation, the communication apparatus may be specifically configured to implement the method performed by the network device in the embodiment in FIG. 9. The apparatus may be the network device, or may be a chip or a chip group in the network device, or a part of the chip that is configured to perform a related method function. The processing unit 1202 is configured to determine a paging occasion based on an identifier of a terminal device, where if the terminal device runs in a network energy saving mode, a quantity of bits of the identifier of the terminal device is greater than a quantity of bits for the terminal device that does not run in the network energy saving mode. The communication unit 1201 is configured to send a paging message on the paging occasion.

For example, if the terminal device runs in the network energy saving mode, a total quantity of paging occasions in a paging cycle is greater than 4, and the quantity of bits of the identifier of the terminal device is greater than 12.

In an implementation, the communication apparatus may be specifically configured to implement the method performed by the terminal device in the embodiment in FIG. 10. The apparatus may be the terminal device, or may be a chip or a chip group in the terminal device, or a part of the chip that is configured to perform a related method function. The communication unit 1201 is configured to receive a PEI, where the PEI indicates a total quantity of paging occasions on which monitoring needs to be performed in a paging cycle. The processing unit 1202 is configured to determine a paging occasion based on the total quantity indicated by the PEI. The communication unit 1201 is configured to monitor a paging message on the paging occasion.

For example, the total quantity indicated by the PEI is less than Ns, and Ns is a total quantity, indicated by a system message, of paging occasions on which monitoring needs to be performed in the paging cycle.

For example, the total quantity indicated by the PEI is related to a quantity of terminal devices corresponding to the PEI.

In an implementation, the communication apparatus may be specifically configured to implement the method performed by the network device in the embodiment in FIG. 10. The apparatus may be the network device, or may be a chip or a chip group in the network device, or a part of the chip that is configured to perform a related method function. The communication unit 1201 is configured to send a PEI, where the PEI indicates a total quantity of paging occasions on which monitoring needs to be performed in a paging cycle. The processing unit 1202 is configured to determine a paging occasion based on the total quantity indicated by the PEI. The communication unit 1201 is configured to send a paging message on the paging occasion.

For example, the total quantity indicated by the PEI is less than Ns, and Ns is a total quantity, indicated by a system message, of paging occasions on which monitoring needs to be performed in the paging cycle.

For example, the total quantity indicated by the PEI is related to a quantity of terminal devices corresponding to the PEI.

In an implementation, the communication apparatus may be specifically configured to implement the method performed by the terminal device in the embodiment in FIG. 11. The apparatus may be the terminal device, or may be a chip or a chip group in the terminal device, or a part of the chip that is configured to perform a related method function. The communication unit 1201 is configured to receive a system message, where the system message indicates a total quantity Ns of paging occasions on which monitoring needs to be performed in a paging cycle. The processing unit 1202 is configured to determine a paging occasion based on Ns and a total quantity N0 of paging occasions in on duration of a network device. The communication unit 1201 is configured to monitor a paging message on the paging occasion.

Optionally, the processing unit 1202 is specifically configured to determine the paging occasion based on N', where N'=min{N0, Ns}.

In an implementation, the communication apparatus may be specifically configured to implement the method performed by the network device in the embodiment in FIG. 11. The apparatus may be the network device, or may be a chip or a chip group in the network device, or a part of the chip that is configured to perform a related method function. The communication unit 1201 is configured to send a system message, where the system message indicates a total quantity Ns of paging occasions on which monitoring needs to be performed in a paging cycle. The processing unit 1202 is configured to determine a paging occasion based on Ns and a total quantity N0 of paging occasions in on duration of the network device. The communication unit 1201 is further configured to send a paging message on the paging occasion.

Optionally, the processing unit 1202 is specifically configured to determine the paging occasion based on N', where N'=min{N0, Ns}.

Division into the modules in embodiments of this application is an example, is merely division into logical functions, and may be other division during actual implementation. In addition, function modules in embodiments of this application may be integrated into one processor, or each of the modules may exist alone physically, or two or more modules may be integrated into one module. The integrated module may be implemented in a form of hardware, or may be implemented in a form of a software function module. It may be understood that for functions or implementations of the modules in embodiments of this application, further refer to related descriptions in the method embodiments.

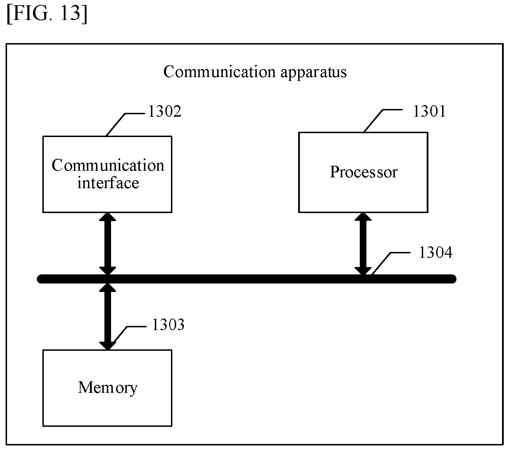

In a possible manner, a communication apparatus may be shown in FIG. 13. The apparatus may be a communication device or a chip in the communication device. The communication device may be a terminal device, or may be a network device. The apparatus includes a processor 1301 and a communication interface 1302, and may further include a memory 1303. The processing unit 1202 may be the processor 1301. The communication unit 1201 may be the communication interface 1302.

The processor 1301 may be a CPU, a digital processing unit, or the like. The communication interface 1302 may be a transceiver, an interface circuit such as a transceiver circuit, a transceiver chip, or the like. The apparatus further includes the memory 1303, configured to store a program executed by the processor 1301. The memory 1303 may be a non-volatile memory such as a hard disk drive (hard disk drive, HDD) or a solid-state drive (solid-state drive, SSD), or may be a volatile memory (volatile memory) such as a random access memory (random access memory, RAM). The memory 1303 is any other medium that can be used to carry or store expected program code in a form of instructions or a data structure and that can be accessed by a computer, but is not limited thereto.

The processor 1301 is configured to execute the program code stored in the memory 1303, and is specifically configured to perform an action of the processing unit 1202. Details are not described herein again in this application. The communication interface 1302 is specifically configured to perform an action of the communication unit 1201. Details are not described herein again in this application.

A specific connection medium between the communication interface 1302, the processor 1301, and the memory 1303 is not limited in this embodiment of this application. In this embodiment of this application, in FIG. 13, the memory 1303, the processor 1301, and the communication interface 1302 are connected through a bus 1304. The bus is indicated by using a bold line in FIG. 13. A connection manner between other components is merely an example for description, and imposes no limitation. Buses may be classified into an address bus, a data bus, a control bus, and the like. For ease of representation, only one bold line is used for representation in FIG. 13, but this does not mean that there is only one bus or only one type of bus.

An embodiment of this application further provides a computer-readable storage medium, configured to store computer software instructions that need to be executed by the processor. The computer software instructions include a program that needs to be executed by the processor.

An embodiment of this application further provides a communication system, including a communication apparatus configured to implement a function of the terminal device in the embodiment in FIG. 4 and a communication apparatus configured to implement a function of the network device in the embodiment in FIG. 4.

An embodiment of this application further provides a communication system, including a communication apparatus configured to implement a function of the terminal device in the embodiment in FIG. 9 and a communication apparatus configured to implement a function of the network device in the embodiment in FIG. 9.

An embodiment of this application further provides a communication system, including a communication apparatus configured to implement a function of the terminal device in the embodiment in FIG. 10 and a communication apparatus configured to implement a function of the network device in the embodiment in FIG. 10.

An embodiment of this application further provides a communication system, including a communication apparatus configured to implement a function of the terminal device in the embodiment in FIG. 11 and a communication apparatus configured to implement a function of the network device in the embodiment in FIG. 11.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A communication method, wherein the method comprises:

   receiving first information, wherein the first information indicates a sleep cycle of a network device;
   determining a paging frame based on the sleep cycle; and
   monitoring a paging message on the paging frame.

2. The method according to claim 1, wherein the first information is the sleep cycle T1.

3. The method according to claim 2, wherein the determining the paging frame based on the sleep cycle comprises:
   determining the paging frame based on the sleep cycle and a paging cycle.

4. The method according to claim 3, wherein the determining the paging frame based on the sleep cycle and the paging cycle comprises:
   determining a system frame number SFN of the paging frame based on a maximum value between the sleep cycle and the paging cycle.

5. The method according to claim 4, wherein the determining the system frame number SFN of the paging frame based on the maximum value between the sleep cycle and the paging cycle comprises:

   the SFN of the paging frame satisfies the following formula:

   $$A \bmod \max(T1, T)=0,$$

   wherein
   A is determined based on the SFN, T1 is the sleep cycle, T is the paging cycle, and
   mod is a modulo operation.

6. The method according to claim 2, wherein the determining the paging frame based on the sleep cycle comprises:

   when the sleep cycle is less than or equal to a paging cycle, determining a quantity N' of paging frames based on the sleep cycle and the paging cycle; and
   determining an SFN of the paging frame based on N'.

7. The method according to claim 6, wherein N' satisfies the following formula:

   $$N'=T \operatorname{div} T1,$$

   wherein
   T1 is the sleep cycle, T is the paging cycle, and div is an exact division operation.

8. The method according to claim 6 or 7, wherein the determining the SFN of the paging frame based on N' comprises:

   the SFN of the paging frame satisfies the following formula:

   $$A \bmod T=T1*(UE\_ID \bmod N'),$$

   wherein
   A is determined based on the SFN, T is the paging cycle, T1 is the sleep cycle, and
   mod is a modulo operation.

9. The method according to claim 1, wherein the first information is a quantity N of paging frames, N is less than T/16, T is the paging cycle, and N is used for determining the sleep cycle.

10. The method according to claim 9, wherein the determining the paging frame based on the sleep cycle comprises:

    an SFN of the paging frame satisfies the following formula:

    $$A \bmod T2=T1*(UE\_ID \bmod T2/T1),$$

    wherein
    A is determined based on the SFN, T2=max(T1, T), T1 is the sleep cycle, T is the paging cycle, UE_ID is an identifier of a terminal device, mod is a modulo operation, and div is an exact division operation.

11. The method according to any one of claims 5, 8, and 10, wherein A=SFN; or A=SFN+offset, wherein the offset is an offset of the system frame number.

12. The method according to any one of claims 1 to 11, wherein the method further comprises:
    reporting capability information, wherein the capability information indicates that the terminal device supports a network energy saving mode.

13. The method according to any one of claims 1 to 12, wherein the method further comprises:

receiving second information, wherein the second information indicates that the network device enables the network energy saving mode.

14. A communication method, wherein the method comprises:

sending first information, wherein the first information indicates a sleep cycle of a network device;
determining a paging frame based on the sleep cycle; and
sending a paging message on the paging frame.

15. The method according to claim 14, wherein the first information is the sleep cycle T1.

16. The method according to claim 15, wherein the determining the paging frame based on the sleep cycle comprises: determining the paging frame based on the sleep cycle and a paging cycle.

17. The method according to claim 16, wherein the determining the paging frame based on the sleep cycle and the paging cycle comprises:
determining a system frame number SFN of the paging frame based on a maximum value between the sleep cycle and the paging cycle.

18. The method according to claim 17, wherein the determining the system frame number SFN of the paging frame based on the maximum value between the sleep cycle and the paging cycle comprises:

the SFN of the paging frame satisfies the following formula:

$$A \bmod \max(T1, T)=0,$$

wherein
A is determined based on the SFN, T1 is the sleep cycle, T is the paging cycle, and
mod is a modulo operation.

19. The method according to claim 15, wherein the determining the paging frame based on the sleep cycle comprises:
when the sleep cycle is less than or equal to a paging cycle, determining a quantity N' of paging frames based on the sleep cycle and the paging cycle; and
determining an SFN of the paging frame based on N'.

20. The method according to claim 19, wherein N' satisfies the following formula:

$$N'=T \operatorname{div} T1,$$

wherein
T1 is the sleep cycle, T is the paging cycle, and div is an exact division operation.

21. The method according to claim 19 or 20, wherein the determining the SFN of the paging frame based on N' comprises:

the SFN of the paging frame satisfies the following formula:

$$A \bmod T=T1*(UE\_ID \bmod N'),$$

wherein
A is determined based on the SFN, T is the paging cycle, T1 is the sleep cycle, and
mod is a modulo operation.

22. The method according to claim 14, wherein the first information indicates a quantity N of paging frames, N is less than T/16, T is the paging cycle, and N is used for determining the sleep cycle.

23. The method according to claim 22, wherein the determining the paging frame based on the sleep cycle comprises:

an SFN of the paging frame satisfies the following formula:

$$A \bmod T2 = (T2 \operatorname{div} T2/T1) * (UE\_ID \bmod T2/T1),$$

wherein

A is determined based on the SFN, T2=max(T1, T), T1 is the sleep cycle, T is the paging cycle, UE_ID is an identifier of a terminal device, mod is a modulo operation, and div is an exact division operation.

24. The method according to claim 18, 21, or 23, wherein A=SFN; or A=SFN+offset,
wherein the offset is an offset of the system frame number.

25. The method according to any one of claims 14 to 24, wherein the method further comprises:

   determining that the terminal device supports a network energy saving mode; and
   enabling the network energy saving mode.

26. The method according to any one of claims 14 to 25, wherein the method further comprises:
sending second information, wherein the second information indicates that the network device enables the network energy saving mode.

27. A communication method, wherein the method comprises:

   determining a paging occasion based on an identifier of a terminal device; and
   monitoring a paging message on the paging occasion, wherein if the terminal device runs in a network energy saving mode, a quantity of bits of the identifier of the terminal device is greater than a quantity of bits for the terminal device that does not run in the network energy saving mode.

28. The method according to claim 27, wherein if the terminal device runs in the network energy saving mode, a total quantity of paging occasions in a paging cycle is greater than 4, and the quantity of bits of the identifier of the terminal device is greater than 12.

29. The method according to claim 27 or 28, wherein the terminal device runs in the network energy saving mode, the identifier of the terminal device is 5G-S-TMSI mod 4096, and 5G-S-TMSI is a 5G temporary mobile subscription identifier of the terminal device.

30. A communication method, wherein the method comprises:

   determining a paging occasion based on an identifier of a terminal device; and
   sending a paging message on the paging occasion, wherein if the terminal device runs in a network energy saving mode, a quantity of bits of the identifier of the terminal device is greater than a quantity of bits for the terminal device that does not run in the network energy saving mode.

31. The method according to claim 30, wherein if the terminal device runs in the network energy saving mode, a total quantity of paging occasions in a paging cycle is greater than 4, and the quantity of bits of the identifier of the terminal device is greater than 12.

32. The method according to claim 30 or 31, wherein the terminal device runs in the network energy saving mode, the identifier of the terminal device is 5G-S-TMSI mod 4096, and 5G-S-TMSI is a 5G temporary mobile subscription identifier of the terminal device.

33. A communication method, wherein the method comprises:

   receiving a paging early indication PEI, wherein the PEI indicates a total quantity of paging occasions on which monitoring needs to be performed in a paging cycle;
   determining a paging occasion based on the total quantity indicated by the PEI; and
   monitoring a paging message on the paging occasion.

34. The method according to claim 33, wherein the total quantity indicated by the PEI is less than Ns, and Ns is a total quantity, indicated by a system message, of paging occasions on which monitoring needs to be performed in the paging cycle.

35. The method according to claim 33 or 34, wherein the total quantity indicated by the PEI is related to a quantity of terminal devices corresponding to the PEI.

36. The method according to any one of claims 33 to 35, wherein an index number i_s of

the paging occasion may satisfy the following formula:

$$i\_s = \text{floor}\,(UE\_ID/N) \bmod Ns',$$

wherein
Ns' is the total quantity of paging occasions indicated by the PEI, UE_ID is an identifier of the terminal device, and N is a quantity of paging frames in one paging cycle.

37. A communication method, wherein the method comprises:

sending a paging early indication PEI, wherein the PEI indicates a total quantity of paging occasions on which monitoring needs to be performed in a paging cycle;
determining a paging occasion based on the total quantity indicated by the PEI; and
sending a paging message on the paging occasion.

38. The method according to claim 37, wherein the total quantity indicated by the PEI is less than Ns, and Ns is a total quantity, indicated by a system message, of paging occasions on which monitoring needs to be performed in the paging cycle.

39. The method according to claim 37 or 38, wherein the total quantity indicated by the PEI is related to a quantity of terminal devices corresponding to the PEI.

40. The method according to any one of claims 37 to 39, wherein an index number i_s of

the paging occasion may satisfy the following formula:

$$i\_s = \text{floor}\,(UE\_ID/N) \bmod Ns',$$

wherein
Ns' is the total quantity of paging occasions indicated by the PEI, UE_ID is an identifier of the terminal device, and N is a quantity of paging frames in one paging cycle.

41. A communication method, wherein the method comprises:

receiving a system message, wherein the system message indicates a total quantity Ns of paging occasions on which monitoring needs to be performed in a paging cycle;
determining a paging occasion based on Ns and a total quantity N0 of paging occasions in on duration of a network device; and
monitoring a paging message on the paging occasion.

42. The method according to claim 41, wherein the determining the paging occasion based on Ns and the total quantity N0 of paging occasions in the on duration of the network device comprises:
determining the paging occasion based on N', wherein N'=min{N0, Ns}.

43. The method according to claim 41 or 42, wherein an index value i_s of the paging occasion may satisfy the following formula:

$$i\_s=\text{floor}\,(UE\_ID/N)\bmod\min\{N0, Ns\},$$

wherein
UE_ID is an identifier of a terminal device, and N is a quantity of paging frames in one paging cycle.

44. A communication method, wherein the method comprises:

sending a system message, wherein the system message indicates a total quantity Ns of paging occasions on which monitoring needs to be performed in a paging cycle;
determining a paging occasion based on Ns and a total quantity N0 of paging occasions in on duration of a network device; and
sending a paging message on the paging occasion.

45. The method according to claim 44, wherein the determining the paging occasion based on Ns and the total quantity N0 of paging occasions in the on duration of the network device comprises:
determining the paging occasion based on N', wherein N'=min{N0, Ns}.

46. The method according to claim 44 or 45, wherein an index value i_s of the paging occasion may satisfy the following formula:

$$i\_s=\text{floor}\,(UE\_ID/N)\bmod\min\{N0, Ns\},$$

wherein
UE_ID is an identifier of a terminal device, and N is a quantity of paging frames in one paging cycle.

47. A communication apparatus, comprising a unit or module configured to perform the method according to any one of claims 1 to 13, comprising a unit or module configured to perform the method according to any one of claims 14 to 26, comprising a unit or module configured to perform the method according to any one of claims 27 to 29, comprising a unit or module configured to perform the method according to any one of claims 30 to 32, comprising a unit or module configured to perform the method according to any one of claims 33 to 36, comprising a unit or module configured to perform the method according to any one of claims 37 to 40, comprising a unit or module configured to perform the method according to any one of claims 41 to 43, or comprising a unit or module configured to perform the method according to any one of claims 44 to 46.

48. A communication apparatus, comprising a processor and a memory, wherein the memory is configured to store program instructions, and when the processor executes the program instructions, the method according to any one of claims 1 to 13 is performed, the method according to any one of claims 14 to 26 is performed, the method according to any one of claims 27 to 29 is performed, the method according to any one of claims 30 to 32 is performed, the method according to any one of claims 33 to 36 is performed, the method according to any one of claims 37 to 40 is performed, the method according to any one of claims 41 to 43 is performed, or the method according to any one of claims 44 to 46 is performed.

49. A computer-readable storage medium, wherein the computer storage medium stores computer-readable instructions, and when the computer-readable instructions are run on a communication apparatus, the method according to any one of claims 1 to 13 is performed, the method according to any one of claims 14 to 26 is performed, the method according to any one of claims 27 to 29 is performed, the method according to any one of claims 30 to 32 is performed, the method according to any one of claims 33 to 36 is performed, the method according to any one of claims 37 to 40 is performed, the method according to any one of claims 41 to 43 is performed, or the method according to any one of claims 44 to 46 is performed.

**Amended claims under Art. 19.1 PCT**

1. A communication method, wherein the method comprises:

determining a paging occasion based on an identifier of a terminal device; and
monitoring a paging message on the paging occasion, wherein an index i_s of the paging occasion satisfies the following formula:

$$i\_s=floor\ (UE\_ID/N)\ mod\ Ns;$$

and

floor is a floor operation, UE_ID is the identifier of the terminal device, N is a quantity of paging frames in a paging cycle, and if the terminal device runs in a network energy saving mode, Ns is greater than 4.

2. The method according to claim 1, wherein Ns is a quantity of paging occasions POs corresponding to the paging frame PF.

3. The method according to claim 1 or 2, wherein Ns is 8 or 16.

4. The method according to any one of claims 1 to 3, wherein N is T/32, T/64, T/128, or T/256, and T is the paging cycle.

5. The method according to any one of claims 1 to 4, wherein if the terminal device runs in the network energy saving mode, a quantity of bits of the identifier of the terminal device is greater than a quantity of bits for the terminal device that does not run in the network energy saving mode.

6. The method according to claim 5, wherein if the terminal device runs in the network energy saving mode, the quantity of bits of the identifier of the terminal device is greater than 12.

7. The method according to claim 5 or 6, wherein the terminal device runs in the network energy saving mode, the identifier of the terminal device is 5G-S-TMSI mod 4096, and 5G-S-TMSI is a 5G temporary mobile subscription identifier of the terminal device.

8. A communication method, wherein the method comprises:

determining a paging occasion based on an identifier of a terminal device; and
sending a paging message on the paging occasion, wherein an index i_s of the paging occasion satisfies the following formula:

$$i\_s=floor\ (UE\_ID/N)\ mod\ Ns;$$

and

floor is a floor operation, UE_ID is the identifier of the terminal device, N is a quantity of paging frames in a paging cycle, and if the terminal device runs in a network energy saving mode, Ns is greater than 4.

9. The method according to claim 8, wherein Ns is a quantity of paging occasions POs corresponding to the paging frame PF.

10. The method according to claim 8 or 9, wherein Ns is 8 or 16.

11. The method according to any one of claims 8 to 10, wherein N is T/32, T/64, T/128, or T/256, and T is the paging cycle.

12. The method according to any one of claims 8 to 11, wherein if the terminal device runs in the network energy saving mode, a quantity of bits of the identifier of the terminal device is greater than a quantity of bits for the terminal device that does not run in the network energy saving mode.

13. The method according to claim 12, wherein if the terminal device runs in the network energy saving mode, the quantity of bits of the identifier of the terminal device is greater than 12.

14. The method according to claim 12 or 13, wherein the terminal device runs in the network energy saving mode, the identifier of the terminal device is 5G-S-TMSI mod 4096, and 5G-S-TMSI is a 5G temporary mobile subscription identifier of the terminal device.

15. A communication method, wherein the method comprises:

receiving first information, wherein the first information indicates a sleep cycle of a network device; determining a paging frame based on the sleep cycle; and monitoring a paging message on the paging frame.

16. The method according to claim 15, wherein the first information is the sleep cycle T1.

17. The method according to claim 16, wherein the determining the paging frame based on the sleep cycle comprises: determining the paging frame based on the sleep cycle and a paging cycle.

18. The method according to claim 17, wherein the determining the paging frame based on the sleep cycle and the paging cycle comprises:
determining a system frame number SFN of the paging frame based on a maximum value between the sleep cycle and the paging cycle.

19. The method according to claim 18, wherein the determining the system frame number SFN of the paging frame based on the maximum value between the sleep cycle and the paging cycle comprises:

the SFN of the paging frame satisfies the following formula:

$$A \bmod \max(T1, T)=0,$$

wherein
A is determined based on the SFN, T1 is the sleep cycle, T is the paging cycle, and
mod is a modulo operation.

20. The method according to claim 16, wherein the determining the paging frame based on the sleep cycle comprises:

when the sleep cycle is less than or equal to a paging cycle, determining a quantity N' of paging frames based on the sleep cycle and the paging cycle; and
determining an SFN of the paging frame based on N'.

21. The method according to claim 20, wherein N' satisfies the following formula:

$$N'=T \bmod T1,$$

wherein
T1 is the sleep cycle, T is the paging cycle, and div is an exact division operation.

22. The method according to claim 20 or 21, wherein the determining the SFN of the paging frame based on N' comprises:

the SFN of the paging frame satisfies the following formula:

$$A \bmod T=T1*(UE\_ID \bmod N'),$$

wherein
A is determined based on the SFN, T is the paging cycle, T1 is the sleep cycle, and
mod is a modulo operation.

23. The method according to claim 15, wherein the first information is a quantity N of paging frames, N is less than T/16, T is the paging cycle, and N is used for determining the sleep cycle.

24. The method according to claim 23, wherein the determining the paging frame based on the sleep cycle comprises:

an SFN of the paging frame satisfies the following formula:

$$A \bmod T2=T1*(UE\_ID \bmod T2/T1),$$

wherein
A is determined based on the SFN, T2=max(T1, T), T1 is the sleep cycle, T is the paging cycle, UE_ID is an identifier of a terminal device, mod is a modulo operation, and div is an exact division operation.

25. The method according to any one of claims 19, 22, and 24, wherein A=SFN; or A=SFN+offset, wherein the offset is an offset of the system frame number.

26. The method according to any one of claims 15 to 25, wherein the method further comprises:
reporting capability information, wherein the capability information indicates that the terminal device supports a network energy saving mode.

27. The method according to any one of claims 15 to 26, wherein the method further comprises:
receiving second information, wherein the second information indicates that the network device enables the network energy saving mode.

28. A communication method, wherein the method comprises:

sending first information, wherein the first information indicates a sleep cycle of a network device;
determining a paging frame based on the sleep cycle; and
sending a paging message on the paging frame.

29. The method according to claim 28, wherein the first information is the sleep cycle T1.

30. The method according to claim 29, wherein the determining the paging frame based on the sleep cycle comprises:
determining the paging frame based on the sleep cycle and a paging cycle.

31. The method according to claim 30, wherein the determining the paging frame based on the sleep cycle and the paging cycle comprises:
determining a system frame number SFN of the paging frame based on a maximum value between the sleep cycle and the paging cycle.

32. The method according to claim 31, wherein the determining the system frame number SFN of the paging frame based on the maximum value between the sleep cycle and the paging cycle comprises:

the SFN of the paging frame satisfies the following formula:

$$A \bmod \max(T1, T) = 0,$$

wherein
A is determined based on the SFN, T1 is the sleep cycle, T is the paging cycle, and
mod is a modulo operation.

33. The method according to claim 29, wherein the determining the paging frame based on the sleep cycle comprises:

when the sleep cycle is less than or equal to a paging cycle, determining a quantity N' of paging frames based on the sleep cycle and the paging cycle; and
determining an SFN of the paging frame based on N'.

34. The method according to claim 33, wherein N' satisfies the following formula:

$$N' = T \text{ div } T1,$$

wherein
T1 is the sleep cycle, T is the paging cycle, and div is an exact division operation.

35. The method according to claim 33 or 34, wherein the determining the SFN of the paging frame based on N' comprises:

the SFN of the paging frame satisfies the following formula:

$$A \bmod T = T1*(UE\_ID \bmod N'),$$

wherein
A is determined based on the SFN, T is the paging cycle, T1 is the sleep cycle, and
mod is a modulo operation.

36. The method according to claim 28, wherein the first information indicates a quantity N of paging frames, N is less than T/16, T is the paging cycle, and N is used for determining the sleep cycle.

37. The method according to claim 36, wherein the determining the paging frame based on the sleep cycle comprises:

an SFN of the paging frame satisfies the following formula:

$$A \bmod T2 = (T2 \operatorname{div} T2/T1)*(UE\_ID \bmod T2/T1),$$

wherein
A is determined based on the SFN, T2=max(T1, T), T1 is the sleep cycle, T is the paging cycle, UE_ID is an identifier of a terminal device, mod is a modulo operation, and div is an exact division operation.

38. The method according to claim 32, 35, or 37, wherein A=SFN; or A=SFN+offset,
wherein
the offset is an offset of the system frame number.

39. The method according to any one of claims 28 to 38, wherein the method further comprises:

determining that the terminal device supports a network energy saving mode; and
enabling the network energy saving mode.

40. The method according to any one of claims 28 to 39, wherein the method further comprises:
sending second information, wherein the second information indicates that the network device enables the network energy saving mode.

41. A communication method, wherein the method comprises:

receiving a paging early indication PEI, wherein the PEI indicates a total quantity of paging occasions on which monitoring needs to be performed in a paging cycle;
determining a paging occasion based on the total quantity indicated by the PEI; and
monitoring a paging message on the paging occasion.

42. The method according to claim 41, wherein the total quantity indicated by the PEI is less than Ns, and Ns is a total quantity, indicated by a system message, of paging occasions on which monitoring needs to be performed in the paging cycle.

43. The method according to claim 41 or 42, wherein the total quantity indicated by the PEI is related to a quantity of terminal devices corresponding to the PEI.

44. The method according to any one of claims 41 to 43, wherein an index number i_s of the paging occasion may satisfy the following formula:

$$i\_s = \operatorname{floor}(UE\_ID/N) \bmod Ns',$$

wherein
Ns' is the total quantity of paging occasions indicated by the PEI, UE_ID is an identifier of the terminal device, and N is a quantity of paging frames in one paging cycle.

**45.** A communication method, wherein the method comprises:

sending a paging early indication PEI, wherein the PEI indicates a total quantity of paging occasions on which monitoring needs to be performed in a paging cycle;
determining a paging occasion based on the total quantity indicated by the PEI; and
sending a paging message on the paging occasion.

**46.** The method according to claim 45, wherein the total quantity indicated by the PEI is less than Ns, and Ns is a total quantity, indicated by a system message, of paging occasions on which monitoring needs to be performed in the paging cycle.

**47.** The method according to claim 45 or 46, wherein the total quantity indicated by the PEI is related to a quantity of terminal devices corresponding to the PEI.

**48.** The method according to any one of claims 45 to 47, wherein an index number i_s of the paging occasion may satisfy the following formula:

$$i\_s = floor\ (UE\_ID/N)\ mod\ Ns',$$

wherein
Ns' is the total quantity of paging occasions indicated by the PEI, UE_ID is an identifier of the terminal device, and N is a quantity of paging frames in one paging cycle.

**49.** A communication method, wherein the method comprises:

receiving a system message, wherein the system message indicates a total quantity Ns of paging occasions on which monitoring needs to be performed in a paging cycle;
determining a paging occasion based on Ns and a total quantity NO of paging occasions in on duration of a network device; and
monitoring a paging message on the paging occasion.

**50.** The method according to claim 49, wherein the determining the paging occasion based on Ns and the total quantity NO of paging occasions in the on duration of the network device comprises:
determining the paging occasion based on N', wherein N'=min{N0, Ns}.

**51.** The method according to claim 49 or 50, wherein an index value i_s of the paging occasion may satisfy the following formula:

$$i\_s = floor\ (UE\_ID/N)\ mod\ min\{N0, Ns\},$$

wherein
UE_ID is an identifier of a terminal device, and N is a quantity of paging frames in one paging cycle.

**52.** A communication method, wherein the method comprises:

sending a system message, wherein the system message indicates a total quantity Ns of paging occasions on which monitoring needs to be performed in a paging cycle;
determining a paging occasion based on Ns and a total quantity N0 of paging occasions in on duration of a network device; and
sending a paging message on the paging occasion.

**53.** The method according to claim 52, wherein the determining the paging occasion based on Ns and the total quantity N0 of paging occasions in the on duration of the network device comprises:
determining the paging occasion based on N', wherein N'=min{N0, Ns}.

**54.** The method according to claim 52 or 53, wherein an index value i_s of the paging occasion may satisfy the following formula:

$$i\_s = \text{floor}(UE\_ID/N) \bmod \min\{N0, Ns\},$$

wherein
UE_ID is an identifier of a terminal device, and N is a quantity of paging frames in one paging cycle.

55. A communication apparatus, comprising a unit or module configured to perform the method according to any one of claims 1 to 7, comprising a unit or module configured to perform the method according to any one of claims 8 to 14, comprising a unit or module configured to perform the method according to any one of claims 15 to 27, comprising a unit or module configured to perform the method according to any one of claims 28 to 40, comprising a unit or module configured to perform the method according to any one of claims 41 to 44, comprising a unit or module configured to perform the method according to any one of claims 45 to 48, comprising a unit or module configured to perform the method according to any one of claims 49 to 51, or comprising a unit or module configured to perform the method according to any one of claims 52 to 54.

56. A communication apparatus, comprising a processor and a memory, wherein the memory is configured to store program instructions, and when the processor executes the program instructions, the method according to any one of claims 1 to 7 is performed, the method according to any one of claims 8 to 14 is performed, the method according to any one of claims 15 to 27 is performed, the method according to any one of claims 28 to 40 is performed, the method according to any one of claims 41 to 44 is performed, the method according to any one of claims 45 to 48 is performed, the method according to any one of claims 49 to 51 is performed, or the method according to any one of claims 52 to 54 is performed.

57. A computer-readable storage medium, wherein the computer storage medium stores computer-readable instructions, and when the computer-readable instructions are run on a communication apparatus, the method according to any one of claims 1 to 7 is performed, the method according to any one of claims 8 to 14 is performed, the method according to any one of claims 15 to 27 is performed, the method according to any one of claims 28 to 40 is performed, the method according to any one of claims 41 to 44 is performed, the method according to any one of claims 45 to 48 is performed, the method according to any one of claims 49 to 51 is performed, or the method according to any one of claims 52 to 54 is performed.

[FIG. 1]

[FIG. 2]

[FIG. 3]

[FIG. 4]

[FIG. 5]

[FIG. 6]

[FIG. 7]

UE_ID=34

6    126    134

UE_ID=36

14    126    142

[FIG. 8]

T=32

0    32    64    96    128

T=64

0    64    128

T=128

0    128

[FIG. 9]

[FIG. 10]

[FIG. 11]

```
┌──────────────────┐                    ┌──────────────────┐
│  Network device  │                    │  Terminal device │
└────────┬─────────┘                    └────────┬─────────┘
         │         S1101: System message         │
         │ ────────────────────────────────────▶ │
┌────────┴─────────┐                    ┌────────┴─────────┐
│ S1103: Determine │                    │ S1102: Determine │
│  the PO based on │                    │  a PO based on Ns│
│ Ns and the total │                    │ and a total      │
│ quantity N0 of   │                    │ quantity N0 of   │
│ POs in the on    │                    │ POs in on        │
│ duration of the  │                    │ duration of the  │
│ network device   │                    │ network device   │
└────────┬─────────┘                    └────────┬─────────┘
         │    S1104: Send a paging               │
         │     message on the PO        ┌────────┴─────────┐
         │ ───────────────────────────▶ │   Monitor the    │
         │                              │ paging message   │
         │                              │    on the PO     │
         │                              └────────┬─────────┘
         │                                       │
```

[FIG. 12]

```
┌──────────────────────────────────────┐
│ Communication apparatus              │
│                                      │
│   ┌──────────────────────┐           │
│   │  Communication unit  │────── 1201│
│   └───────────┬──────────┘           │
│               │                      │
│   ┌───────────┴──────────┐           │
│   │   Processing unit     │────── 1202│
│   └──────────────────────┘           │
│                                      │
└──────────────────────────────────────┘
```

38

[FIG. 13]

## INTERNATIONAL SEARCH REPORT

| International application No. |
| --- |
| **PCT/CN2024/114604** |

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT, WPABS, WPABSC, ENTXT, ENTXTC, CJFD, IEEE, 3GPP, CNKI: 能耗, 功耗, 基站, 休眠, 激活, 寻呼, 帧, 时机, 机会, power, BS, eNodeB, AP, DTX, DRX, paging, frame, PF, PO

### C. DOCUMENTS CONSIDERED TO BE RELEVANT

| Category* | Citation of document, with indication, where appropriate, of the relevant passages | Relevant to claim No. |
| --- | --- | --- |
| X | CN 104219764 A (HUAWEI TECHNOLOGIES CO., LTD.) 17 December 2014 (2014-12-17) description, paragraphs [0002]-[0489] | 1-26, 47-49 |
| Y | CN 104219764 A (HUAWEI TECHNOLOGIES CO., LTD.) 17 December 2014 (2014-12-17) description, paragraphs [0002]-[0489] | 41-46 |
| X | CN 114071710 A (BEIJING SAMSUNG TELECOM R&D CENTER CO., LTD.; SAMSUNG ELECTRONICS CO., LTD.) 18 February 2022 (2022-02-18) description, paragraphs [0002]-[0305] | 33-40 |
| Y | CN 114071710 A (BEIJING SAMSUNG TELECOM R&D CENTER CO., LTD.; SAMSUNG ELECTRONICS CO., LTD.) 18 February 2022 (2022-02-18) description, paragraphs [0002]-[0305] | 41-46 |
| A | CN 116113036 A (HUAWEI TECHNOLOGIES CO., LTD.) 12 May 2023 (2023-05-12) description, paragraphs [0002]-[0576] | 27-32, 47-49 |
| A | CN 116406515 A (BEIJING XIAOMI MOBILE SOFTWARE CO., LTD.) 07 July 2023 (2023-07-07) entire document | 1-49 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 October 2024** | **21 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/114604** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 115362724 A (GUANGDONG OPPO MOBILE TELECOMMUNICATIONS CORP., LTD.) 18 November 2022 (2022-11-18) entire document | 1-49 |

**INTERNATIONAL SEARCH REPORT**
Information on patent family members

International application No.

**PCT/CN2024/114604**

| Patent document cited in search report | | | Publication date (day/month/year) | Patent family member(s) | | | Publication date (day/month/year) |
|---|---|---|---|---|---|---|---|
| CN | 104219764 | A | 17 December 2014 | WO | 2014190947 | A1 | 04 December 2014 |
| CN | 114071710 | A | 18 February 2022 | None | | | |
| CN | 116113036 | A | 12 May 2023 | None | | | |
| CN | 116406515 | A | 07 July 2023 | None | | | |
| CN | 115362724 | A | 18 November 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311163329